# EUROPEAN PATENT APPLICATION

(11) **EP 1 434 222 A1**
(43) Date of publication of application: **30.06.2004**
(21) Application number: 02765570.3
(22) Date of filing: 17.09.2002
(51) Int. Cl.: G11B 27/00, G11B 27/10, G11B 20/12, H04N 5/91, H04N 5/782, H04N 5/76

(54) **RECORDER/REPRODUCER AND RECORDING/REPRODUCING METHOD**

(30) Priority: 19.09.2001 JP 2001284719
(71) Applicant: Sony Corporation, Tokyo 141-0001 (JP)
(72) Inventor: KOMATSU, Kouji c/o SONY CORPORATION, Tokyo 141-0001 (JP); MOTONO, Chihiro c/o SONY CORPORATION, Tokyo 141-0001 (JP)
(74) Representative: Mills, Julia
(86) International application number: PCT/JP2002/009494
(87) International publication number: WO 2003/028032

(57) **Abstract**

The present invention relates a recording/playback apparatus that enables efficient management of data recorded on a tape. In an IC chip 32, information such as a recording-start position and recording-end position on the tape of the data recorded on a magnetic tape 31 is recorded in each unit of data. A main signal processing microcomputer 21 reads the information from the IC chip 32, and displays, on the display panel 18, a list of the data recorded on the magnetic tape 31. In accordance with determination of data to be played back from the list, the main signal processing microcomputer 21 supplies a mechanism control microcomputer 22 with a recording-start position on the magnetic tape 31 of the designated data. The mechanism control microcomputer 22 controls a mechanism motor 23 to play back the magnetic tape 31 from the recording-start position.

## Description

### Technical Field

The present invention relates to recording/playback apparatuses and methods, and in particular, to a recording/playback apparatus and method in which data recording on a recording medium can be efficiently managed.

### Background Art

There has conventionally been a recording/playback apparatus in which, when data such as audio and pictures is recorded on a tape cassette, a recording-start position and a recording-stop position on the tape are recorded in a built-in IC (Integrated Circuit) chip of the tape cassette, and in a playback mode, the tape is fast-forwarded (or rewound) to the recording-start position recorded in the IC chip and playback is initiated from the position.

However, the recording/playback apparatus of the related art simply records, in the IC chip, both information of the recording-start position on the tape and information of the recording-stop position on the tape, but cannot record the recording range from the recording-start position to recording-stop position of the data in the IC chip. Accordingly, it has a problem in that the data recorded on the tape cannot be efficiently managed.

In addition, since the recording/playback apparatus of the related art cannot collectively record, in the IC chip, additional information such as on-tape recording positions, data titles, and recording dates which are recorded on the tape, a user has a problem of difficulty in grasping the number of data recorded on the tape, the outlines of data contents, etc.

### Disclosure of Invention

The present invention has been made in view of the above circumstances and is intended to enable efficient management of data recorded on a recording medium.

A recording/playback apparatus of the present invention comprises: a first acquisition means for acquiring, from a second recording medium, information concerning at least one piece of data recorded on a first recording medium; a first extraction means for extracting, from the information acquired by the first acquisition means, each recording-start position of the at least one piece of the data recorded on the first recording medium; a second extraction means for extracting, from the information acquired by the first extraction means, each recording-end position of the data whose recording-start position is extracted by the first extraction means; an accepting means for accepting selection of data to be played back from the at least one piece of the data; and a playback means for playing back the data from the recording-start position corresponding to the selection of data accepted by the accepting means. The information includes the recording-start position and recording-end position of the data, and a recording date and time thereof, and is recorded on the second recording medium in a form which is collectively treated for each of the at least one piece of the data recorded on the first recording medium.

Identification information for identifying each of the at least one piece of the data may be further recorded on the first recording medium and the second recording medium.

The recording/playback apparatus may further comprise: a first recording means for recording the data on the first recording medium; and a second recording means for recording, on the second recording means, the recording-start position and recording-end position of the data recorded on the first recording medium by the first recording means.

The second recording means may further record, on the second recording medium, the year, day, and time of recording, recording-start time, and recording-end time of the data recorded by the first recording means.

The recording/playback apparatus may further comprise a second acquisition means for acquiring a title of the data recorded by the first recording means, whereby the second recording means can further record, on the second recording medium, the title of the data acquired by the second acquisition means.

The recording/playback apparatus may further comprise a capture means for capturing a moving picture or a still picture, whereby the first recording means can record, on the first recording medium, the moving picture or the still picture which is captured by the capture means.

The first recording medium may be a magnetic tape.

The recording/playback apparatus may further comprise a determination means for determining whether or not at least one title of the at least one piece of the data recorded in the information is recorded; and a third extraction means for extracting the at least one title from the information when the determination means determines that the at least one title is recorded; and a display means for displaying a list of the at least one title extracted by the third extraction means. The accepting means can accept the selection of data to be played back from the list displayed by the display means.

The recording/playback apparatus may further comprise a determination means for determining, based on the information, whether or not the at least one piece of the data includes data of at least one still picture; a third extraction means for extracting each recording date and time of the at least one still picture from the information when the determination means determines that the at least one still picture is included; and a display means for displaying the recording date and time corresponding to the at least one still picture extracted by the third extraction means, whereby the accepting means can accept selection of a picture to be played back of the at least one still picture from the recording date and time displayed by the display means.

The recording/playback apparatus may further comprise a third extraction means for extracting, from the information, at least one recording date and time corresponding to the at least one piece of the data; a fourth extraction means for extracting different recording dates from the at least one recording date and time; and a display means for displaying the recording dates extracted by the fourth extraction means, whereby the accepting means can accept the selection of data to be played back from the recording dates displayed by the display means.

A recording/playback method of the present invention includes: a first acquisition step for acquiring, from a second recording medium, information concerning at least one piece of data recorded on a first recording medium; a first extraction step for extracting, from the information acquired in the first acquisition step, each recording-start position of the at least one piece of the data recorded on the first recording medium; a second extraction step for extracting, from the information acquired in the first extraction step, each recording-end position of the data whose recording-start position is extracted in the first extraction step; an accepting step for accepting selection of data to be played back from the at least one piece of the data; and a playback step for playing back the data from the recording-start position corresponding to the selection of data accepted in the accepting step. The information includes the recording-start position and recording-end position of the data, and a recording date and time thereof, and is recorded on the second recording medium in a form which is collectively treated for each of the at least one piece of the data recorded on the first recording medium.

A recording/playback apparatus and method performs: acquiring, from a second recording medium, information concerning at least one piece of data recorded on a first recording medium; extracting, from the acquired information, each recording-start position of the at least one piece of the data recorded on the first recording medium; extracting, from the acquired information, each recording-end position of the data whose recording-start position is extracted; accepting selection of data to be played back from the at least one piece of the data; and playing back the data from the recording-start position corresponding to the selection of data accepted, and the information includes the recording-start position and recording-end position of the data, and a recording date and time thereof, and is recorded on the second recording medium in a form which is collectively treated for each of the at least one piece of the data recorded on the first recording medium.

### Brief Description of the Drawings

Fig. 1 is a block diagram showing the structure of an embodiment of a recording/playback apparatus of the present invention.
Fig. 2 is a flowchart illustrating a recording process of the apparatus in Fig. 1.
Fig. 3 is an illustration of the data structure of a memory in an IC chip.
Fig. 4 is an illustration of the data structure of Media Definition Area.
Fig. 5 is another illustration of the data structure of Media Definition Area.
Fig. 6 is still another illustration of the data structure of Media Definition Area.
Fig. 7 is still another illustration of the data structure of Media Definition Area.
Fig. 8 is an illustration of designation of text by codes.
Fig. 9 is an illustration of the data structure of a PV rom area.
Fig. 10 is an illustration of the data structure of Application Area Information Field.
Fig. 11 is an illustration in which the Data-size Variable Area Start block No address in Fig. 10 is shown extracted.
Fig. 12 is an illustration in which the Data-size-fixed Area Last block No address in Fig. 10 is shown extracted.
Fig. 13 is an illustration in which the Last Data block No address is shown extracted.
Fig. 14 is another illustration of the data structure of the memory in the IC chip.
Fig. 15 is an illustration of the data structure of Memory Information Field.
Fig. 16 is an illustration in which the Set Serial Number in Fig. 15 is shown extracted.
Fig. 17 is an illustration in which the Tape Counter in Fig. 15 is shown extracted.
Fig. 18 is an illustration of the data structure of Media Information Field.
Fig. 19 is an illustration in which the Tape Thickness Correcting Value in Fig. 18 is shown extracted.
Fig. 20 is an illustration in which the Writing last point track number in Fig. 18 is shown extracted.
Fig. 21 is an illustration in which the Last Rec Point track number in Fig. 18 is shown extracted.
Fig. 22 is an illustration in which the Rec Counter in Fig. 18 is shown extracted.
Fig. 23 is an illustration in which the Last MIC_ID is shown extracted.
Fig. 24 is an illustration of the data structure of Record Information Field.
Fig. 25 is an illustration in which the First Rec Data in Fig. 24 is shown extracted.
Fig. 26 is an illustration of the data structure of Label Information Field.
Fig. 27 is an illustration in which the Text Header in Fig. 26 is shown extracted.
Fig. 28 is another illustration of designation of text by codes.
Fig. 29 is still another illustration of designation of text by codes.
Fig. 30 is still another illustration of designation of text by codes.
Fig. 31A is an illustration of designation of text by codes.
Fig. 31B is another illustration of designation of text by codes.
Fig. 32 is an illustration in which the Text Control Code in Fig. 26 is shown extracted.
Fig. 33 is an illustration of an example of a screen displayed on a display panel.
Fig. 34 is an illustration of the data structure of Record Information Field.
Fig. 35 is an illustration of the data structure of Data-size Variable Area.
Fig. 36 is an illustration of the data structure of a text block.
Fig. 37 is an illustration of the data structure of Skip Information Block.
Fig. 38 is a flowchart illustrating a title search process of the apparatus in Fig. 1.
Fig. 39 is an illustration of an example of a screen displayed on a display panel in the process in Fig. 38.
Fig. 40 is a flowchart illustrating a date search process of the apparatus in Fig. 1.
Fig. 41 is an illustration of an example of a screen displayed on a display panel.
Fig. 42 is a flowchart illustrating a photo search process of the apparatus in Fig. 1.
Fig. 43 is an illustration of an example of a screen displayed on a display panel in the process in Fig. 42.

### Best Mode for Carrying Out the Invention

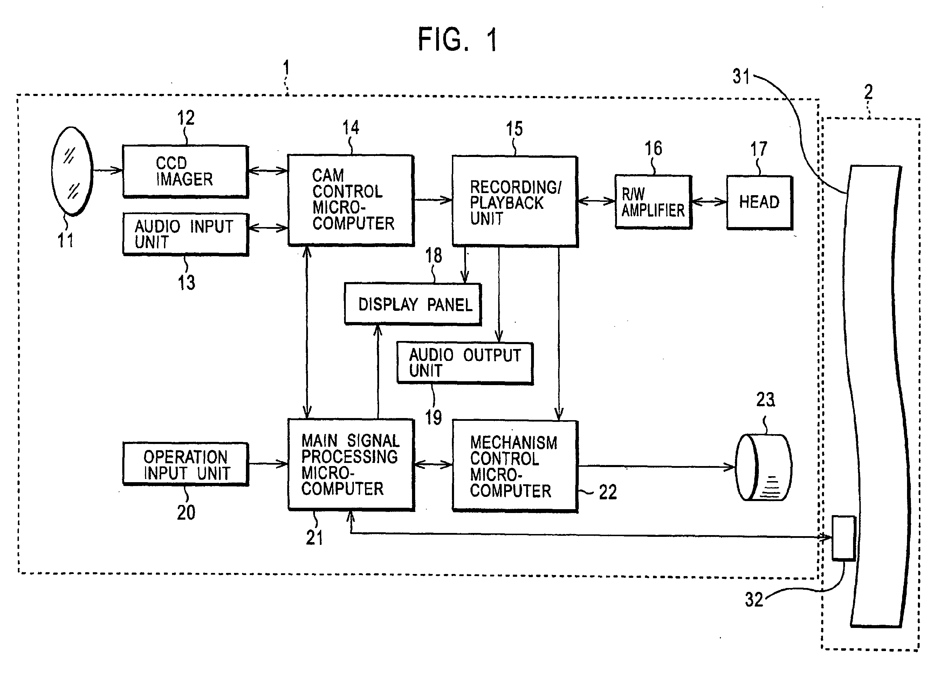

An example of a recording/playback apparatus 1 to which the present invention is applied is described with reference to Fig. 1.

A CCD imager 12 in the recording/playback apparatus 1 uses a lens 11 to capture subjects such as a surrounding landscape and a person in response to a command from a cam control microcomputer 14, creates picture data by performing predetermined processing, and supplies the data to the cam control microcomputer 14.

An audio input unit 13 captures ambient sounds in response to a command from the cam control microcomputer 14, and supplies the cam control microcomputer 14 with audio data in which the sounds are converted into an electronic signal.

In response to a command from a main signal processing microcomputer 21, the cam control microcomputer 14 commands the CCD imager 12 to create picture data of subjects such as a surrounding landscape and a person and to supply the data to the cam control microcomputer 14, and commands the audio input unit 13 to input ambient sounds. In addition, the cam control microcomputer 14 is supplied with picture data (including moving pictures and still pictures) from the CCD imager 12 and is also supplied with audio data from the audio input unit 13, and supplies the data to the main signal processing microcomputer 21 and a recording/playback unit 15.

When the recording/playback unit 15 is supplied with video data from the cam control microcomputer 14, the data is compressed by the MPEG (Moving Picture Experts Group) method and is supplied to a read/write amplifier 16, and the audio data supplied from the cam control microcomputer 14 is also supplied to the read/write amplifier 16. When the recording/playback unit 15 is supplied with still picture data from the cam control microcomputer 14, the data is compressed by the JPEG (Joint Photographic Experts Group) method and is supplied to the read/write amplifier 16. In addition, when the recording/playback unit 15 is supplied with recorded data (data including compressed picture data, and audio data) read from a tape by the read/write amplifier 16, picture data is restored based thereon, and the picture data and the audio data are supplied to the main signal processing microcomputer 21.

The recording/playback unit 15 also acquires information (hereinafter referred to as a track number) concerning where a position of a magnetic tape 31 in which data being recorded (read) by a head 17 is located on the entire magnetic tape 31, as required, and supplies the information to a mechanism control microcomputer 22. At the start of recording data onto the magnetic tape 31, the recording/playback unit 15 uses the read/write amplifier 16 to record an MIC-ID onto the magnetic tape 31, and supplies the MIC-ID to the mechanism control microcomputer 22.

The MIC-ID is a unique ID given to a set (hereinafter referred to as a cut) of data from the start of recording to the end, and is recorded onto the magnetic tape 31. By giving a unique ID to each unit of data, differentiation from another cut of data can be achieved.

When being supplied with the compressed picture data and the audio data from the recording/playback unit 15, the read/write amplifier 16 uses the head 17 to record both onto the magnetic tape 31. Simultaneously, the read/write amplifier 16 uses the head 17 to record the MIC-ID supplied from the recording/playback unit 15 onto the magnetic tape 31. The read/write amplifier 16 uses the head 17 to read the recorded data from the magnetic tape 31, performs predetermined signal processing on the read data, and supplies the processed data to the recording/playback unit 15.

A display panel 18 displays captured video or a played-back picture which is supplied from the recording/playback unit 15, and information concerning record contents of the magnetic tape 31 which is supplied from the main signal processing microcomputer 21.

An audio output unit 19 outputs audio based on audio data supplied from the main signal processing microcomputer 21.

An operation input unit 20 includes a plurality of buttons, receives input of various instructions including a recording instruction or a playback instruction from the user, and supplies the input to the main signal processing microcomputer 21.

The main signal processing microcomputer 21 controls the units of the recording/playback apparatus 1 in accordance with a preset program or instructions input from the operation input unit 20. The main signal processing microcomputer 21 also executes video-recording processing in accordance with an instruction input from the operation input unit 20. Specifically, when a video-capture processing instruction is input from the operation input unit 20 to the main signal processing microcomputer 21, it controls the cam control microcomputer 14 to execute the capture processing (processing for acquiring picture data and audio data and recording both onto the magnetic tape 31) and controls the mechanism control microcomputer 22 to execute processing for driving a mechanism motor 23.

In the main signal processing microcomputer 21, a recording-start track number and an MIC-ID are supplied from the mechanism control microcomputer 22 when picture recording is initiated, and are stored in a built-in memory, and a title is stored in the memory when being input from the operation input unit 20. In the main signal processing microcomputer 21, a recording-start time is simultaneously acquired from a built-in timepiece and is stored in the built-in memory.

When a recording-stop instruction is input from the operation input unit 20, the main signal processing microcomputer 21 instructs the cam control microcomputer 14 to end the video-capture processing and instructs the mechanism control microcomputer 22 to stop the driving of the mechanism motor 23. In addition, in the main signal processing microcomputer 21, a track number at the end of picture recording is supplied from the mechanism control microcomputer 22 and is stored in a built-in memory, and a picture-recording-end time is simultaneously acquired from a built-in timepiece. After that, the main signal processing microcomputer 21 stores, in an IC chip 32 of a tape cassette 2, the recording-start time, the recording-end time, and the title of data which are recorded on the magnetic tape 31, a recording-start track number, a recording-end track number, and the type of data which are recorded on the magnetic tape 31, and an MIC-ID stored in the built-in memory.

When an instruction to display information recorded in the IC chip 32 is input from the operation input unit 20, in the main signal processing microcomputer 21, information, such as the recording track number, recording time, and title of data recorded on the magnetic tape 31, is read from the IC chip 32, is temporarily stored in a built-in memory, and is displayed on the display panel 18.

In accordance with an instruction input from the operation input unit 20, the main signal processing microcomputer 21 instructs the mechanism control microcomputer 22 to play back predetermined data.

When an instruction to capture a still picture is input from the operation input unit 20, the main signal processing microcomputer 21 controls the cam control microcomputer 14 to perform processing that acquires and records still picture data on the magnetic tape 31.

In accordance with an instruction from the main signal processing microcomputer 21, the mechanism control microcomputer 22 drives the mechanism motor 23 to execute a playback, fast-forwarding, and rewinding of the magnetic tape 31, etc. The mechanism control microcomputer 22 receives a track number and an MIC-ID as inputs from the recording/playback unit 15 and supplies the inputs to the main signal processing microcomputer 21.

In accordance with an instruction from the mechanism control microcomputer 22, the mechanism motor 23 plays back, stops, fast forwards, and rewinds the magnetic tape 31.

The tape cassette 2 has the magnetic tape 31 for recording captured picture data and audio data and the built-in IC chip 32 in which information concerning the data recorded on the magnetic tape 31 is recorded.

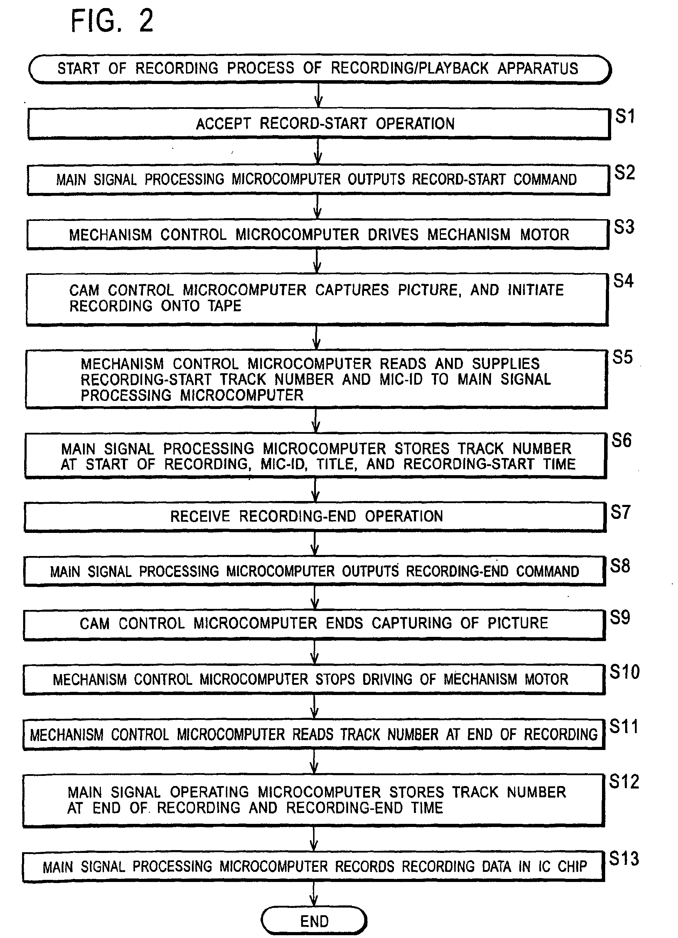

Next, moving picture recording processing by the recording/playback apparatus 1 is described below with reference to the flowchart in Fig. 2.

When a recording-start instruction is input from the operation input unit 20 in step S1, the main signal processing microcomputer 21 instructs the cam control microcomputer 14 and the mechanism control microcomputer 22 to execute consecutive processing that initiate recording in step S2.

In step S3, based on the instruction from the main signal processing microcomputer 21, the mechanism control microcomputer 22 drives the mechanism motor 23 at a predetermined speed.

In step S4, based on the instruction from the main signal processing microcomputer 21, by causing the CCD imager 12 to initiate capture of surrounding environments and creation of picture data, picture data supplied from the CCD imager 12 is acquired, and audio data is acquired from the audio input unit 13. The picture data and the audio data are supplied to the recording/playback unit 15. The recording/playback unit 15 receives the picture data and the audio data as inputs from the cam control microcomputer 14, compresses the picture data by using the MPEG method, and initiates recording of the compressed picture data and the audio data onto the magnetic tape 31 of the tape cassette 2 by the head 17 through the read/write amplifier 16. The recording/playback unit 15 uses the read/write amplifier 16 and the head 17 to record the MIC-ID onto the magnetic tape 31 when initiating recording of the data onto the magnetic tape 31.

In step S5, the recording-start track number and the MIC-ID are acquired from the magnetic tape 31 and are supplied to the mechanism control microcomputer 22. The mechanism control microcomputer 22 supplies the main signal processing microcomputer 21 with the recording-start track number and MIC-ID supplied from the recording/playback unit 15.

In step S6, the main signal processing microcomputer 21 stores, in the built-in memory, the recording-start track number and MIC-ID supplied from the recording/playback unit 15 in step S5 and the recording-start time acquired from the built-in timepiece. When a title is input from the operation input unit 20 at the start of recording, the main signal processing microcomputer 21 stores the title in the built-in memory.

After that, the recording/playback apparatus 1 continues video capturing. When a recording-end instruction is input from the operation input unit 20 in step S7, in step S8, the main signal processing microcomputer 21 instructs the cam control microcomputer 14 and the mechanism control microcomputer 22 to stop the recording processing.

In step S9, the cam control microcomputer 14 controls the CCD imager 12 to stop creation of picture data and controls the audio input unit 13 to stop creation of audio data. The cam control microcomputer 14 also ends supplying picture data and audio data to the recording/playback unit 15. The recording/playback unit 15 ends the recording of data onto the magnetic tape 31 by using the read/write amplifier 16. The recording/playback unit 15 also acquires and supplies a recording-end track number to the mechanism control microcomputer 22.

In step S10, the mechanism control microcomputer 22 stops the driving of the mechanism motor 23.

In step S11, the mechanism control microcomputer 22 acquires the recording-end track number supplied from the recording/playback unit 15 and supplies the track number to the main signal processing microcomputer 21.

In step S12, the main signal processing microcomputer 21 stores, in the built-in memory, the recording-end track number supplied from the mechanism control microcomputer 22. The main signal processing microcomputer 21 also acquires a recording-end time from the built-in timepiece and stores the time in the memory.

In step S13, in the main signal processing microcomputer 21, the recording-start track number, the recording-start time, the title, and the MIC-ID which are stored in step S6, and the recording-end track number and the recording-end time which are stored in step S12 are read from the built-in memory, and are supplied and stored in the built-in IC chip 32 of the tape cassette 2.

The recording/playback apparatus 1 of the present invention records, in the IC chip 32, the recording-start track number, recording-end track number, recording-start time, recording-end time, title, and MIC-ID of a cut of data recorded on the magnetic tape 31 at a time, as described above. Accordingly, based on the information recorded in the IC chip 32, the user can efficiently manage the data recorded on the magnetic tape 31.

Although the foregoing has described the moving picture recording processing, in the case of still picture recording, in step S13, the main signal processing microcomputer 21 simultaneously records, in the IC chip 32, identification information for identifying a still picture.

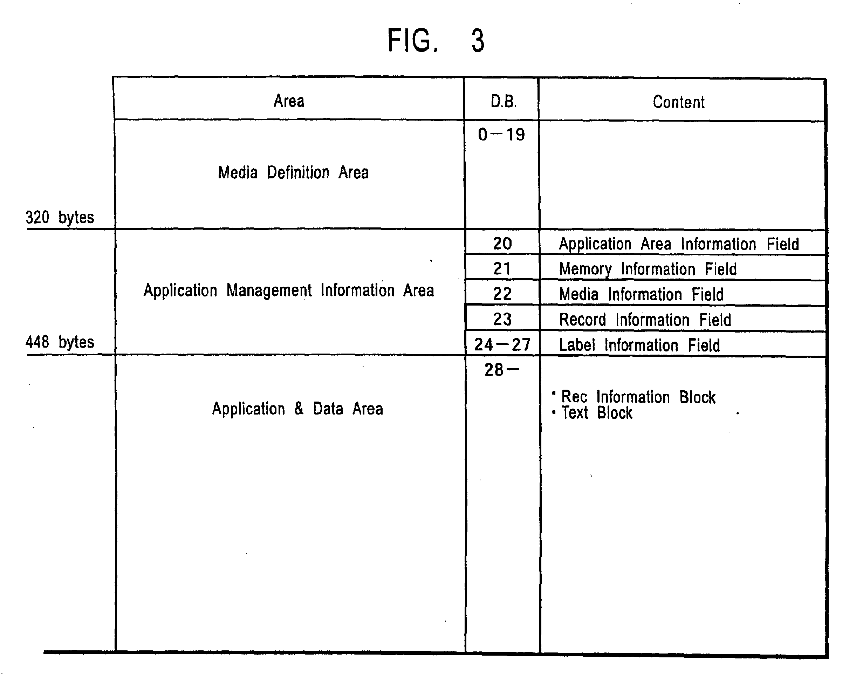

The data structure of the IC chip 32 in which the recording-start track number, the recording-end track number, the recording-start time, the recording-end time, the title, and the MIC-ID are stored in step S13 in Fig. 2 is described with reference to Fig. 3 to Fig. 37.

In the following description, the data recorded on the magnetic tape 31 is referred to as the tape data, and the data recorded in the IC chip 32 is referred to as the IC data.

The data structure of the IC data recorded in a memory in the IC chip 32 can be broadly divided into three areas.

In Fig. 3, the leftest column "Area" shows three area classifications, the central column "D.B." shows data block addresses which are assigned as recording position indicators when the data is recorded in the IC chip 32, and the rightist column "Content" shows the content of information recorded in each area.

The data block is the unit of data recorded in the IC chip 32, and one data block (a D.B. is hereinafter used as a unit) is formed by a 16-byte data capacity. A memory space in the IC chip 32 is divided for each D.B., and the divided spaces are numbered to form data block addresses, which are used as memory-recording-position indicators.

In the table in Fig. 3, as the leftest column "Area" shows, the data structure (format) in the IC chip 32 has the three divisional areas "Media Definition Area", "Application Management Information Area", and "Application & Data Area", from top to down in the table.

As shown in Fig. 3, the Media Definition Area has assigned data block addresses 0 to 19. In the Media Definition Area, the memory size, date of manufacture, and manufacturing plant of the IC chip 32 are recorded. Information recorded in the Media Definition Area cannot be changed by the recording/playback apparatus 1. A detailed description of the information recorded in the Media Definition Area is set forth later.

As shown in Fig. 3, the Application Management Information Area has assigned data block addresses 20 to 27. In the Application Management Information Area, areas used in the memory, the track number of the end portion of the data recorded on the magnetic tape 31, the user-recorded name of the tape cassette 2, last recording date of recording data onto the magnetic tape 31, etc., are recorded. Information recorded in the Application Management Information Area can be changed by the recording/playback apparatus 1. Details of the Application Management Information Area are described later.

The Application & Data Area has assigned data block addresses from 28, as shown in Fig. 3. In the Application & Data Area, information, such as the recording-start track number, recording-end track number, and recording date of at least one piece of tape data which are recorded on the magnetic tape 31, are recorded for each piece of tape data. Details of the Application & Data Area are described later.

The data block addresses of data blocks in which the information of the Application Management Information Area is recorded are indicated by, in the table in Fig. 3, the data block addresses in the central column, "20", "21", "22", "23", and "24 to 27". In the table, the section in the "Content" corresponding to the data block address "20" is described as "Application Area Information Field". In the Application Area Information Field, the sizes of the areas "Data-size-fixed Area" and "Data-size Variable Area", which are described later, are recorded, and the present amounts of utilization of the Data-size-fixed Area and the Data-size Variable Area are recorded. In the table, the section in the "Content" corresponding to the data block address "21" is described as "Memory Information Field". In the Memory Information Field, a unique tape cassette ID is recorded which is assigned to each tape cassette 2 in order to identify the tape cassette 2.

In the table in Fig. 3, the section in the "Content" corresponding to the data block address "22" is described as "Media Information Field". In the Media Information Field, the track number of the end portion of tape data and the recording date of the newest tape data are recorded. In the table in Fig. 3, the section in the "Content" corresponding to the data block address "23" is described as "Record Information Field". In the Record Information Field, information concerning the recording date of the data recorded on the magnetic tape 31 is recorded.

In the table in Fig. 3, the section in the "Content" corresponding to the data block address "24 to 27" is described as "Label Information Field". In the Label Information Field, a label which is put on the tape cassette 2 by the user is recorded.

Details of the information recorded in the Application Management Information Area are described later.

In the table in Fig. 3, data blocks corresponding to the Application & Data Area are the data blocks having data block address 28 and thereafter. The section in the Content corresponding to the Application & Data Area is described as "Rec Information Block" and "Text Block". In the Rec Information Block, information, such as the recording-start track number, recording-end track number, and recording date of at least one piece of data recorded on the magnetic tape 31, is recorded. In the Text Block, text data, which is described later, is recorded.

An outline of the data structure of the memory in the IC chip 32 is as described above.

Next, the information recorded in the three areas, Media Definition Area, Application Management Information Area, and Application & Data Area described with reference to Fig. 3 is described in detail.

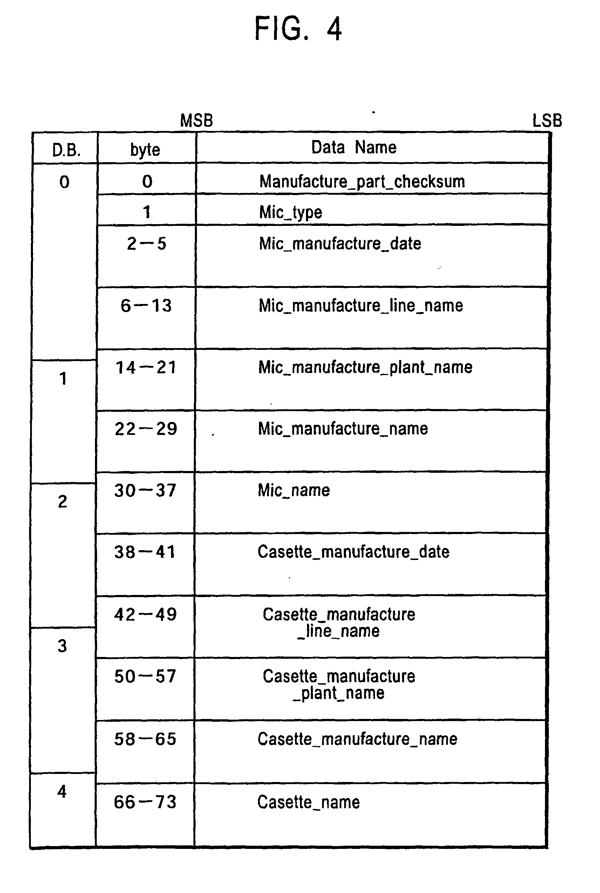

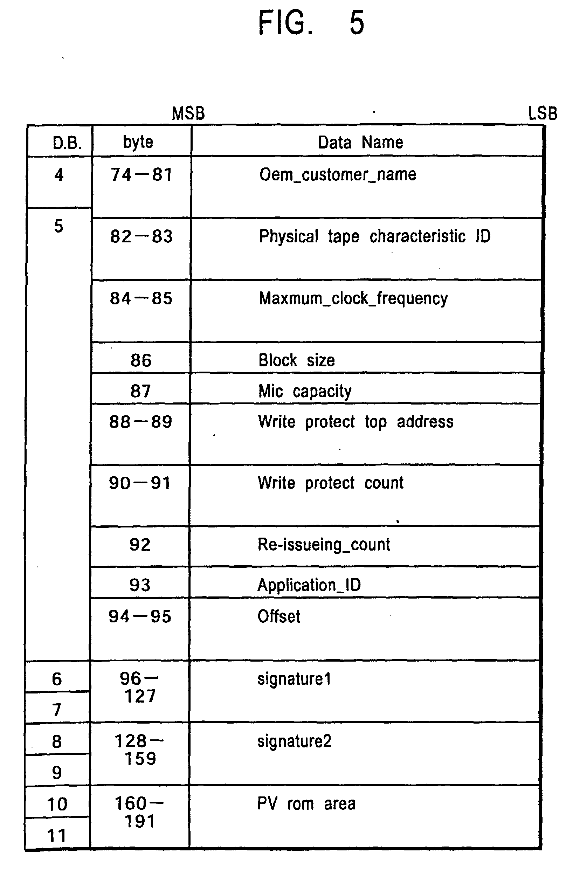

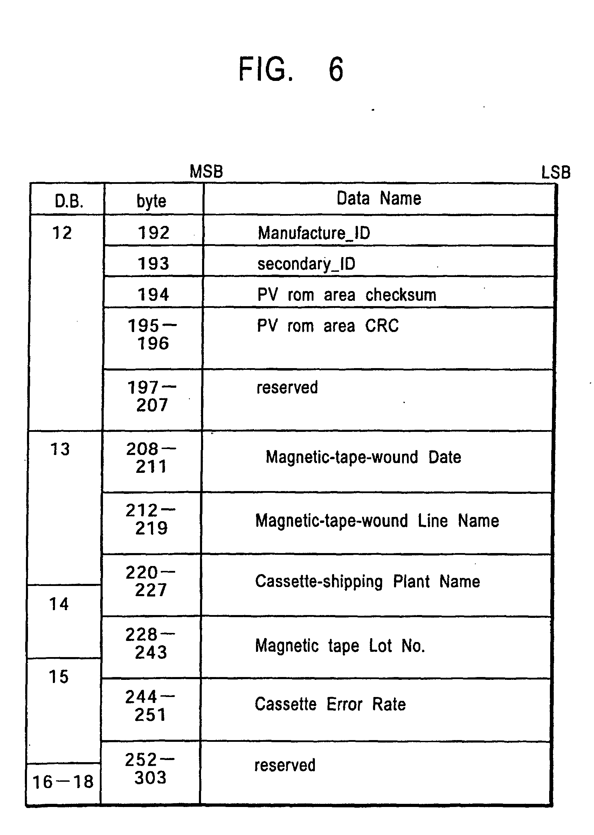

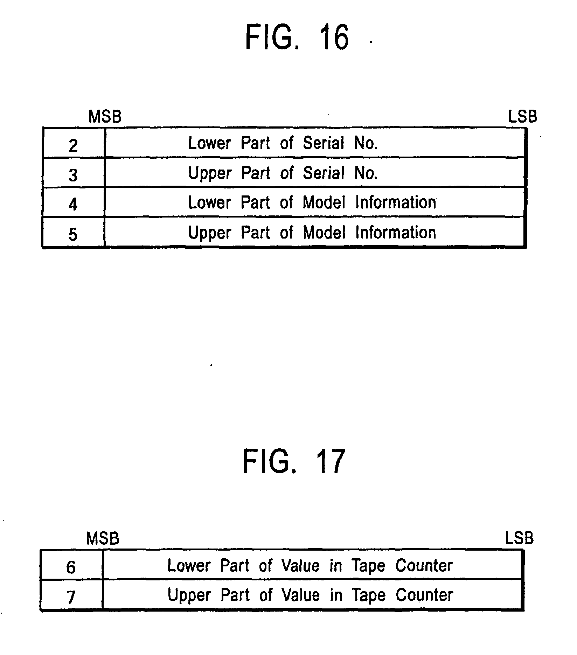

At first, the Media Definition Area is described with reference to Fig. 4 to Fig. 9. The tables in Fig. 4 to Fig. 7 and Fig. 9 show a detailed data structure of the Media Definition Area. As shown in Fig. 3, the Media Definition Area is divided into twenty data blocks 0 to 19. In the tables in Fig. 4 to Fig. 7, the sections of "D.B." shown in the left column show data block addresses and correspond to the block numbers shown in Fig. 3. In other words, the table in Fig. 4 shows data block addresses 0 to 4, the table in Fig. 5 shows data block addresses 4 to 11, the table in Fig. 6 shows data block addresses 12 to 18, and the table in Fig. 17 shows data block address 19.

In all the tables in Fig. 4 to Fig. 7, the left columns show the data block addresses, and the right columns show the data names of the data recorded in the IC chip 32. The central columns in Fig. 4 to Fig. 7 show the sequential numbers of bytes in each of which, when the data blocks 0 to 19 in the Media Definition Area are sequentially numbered from zero in units of bytes, corresponding information is recorded. At the upper left end of the "Data Name" section, "MSB" is indicated which conceptually indicates a most significant bit. Conversely, at the upper right end of the "Data Name" section, "LSB" is indicated which conceptually indicates a least significant bit.

As shown in Fig. 4, in byte 0 of data block address 0, Manufacture _part_checksum, that is, a checksum in a case in which data blocks having data block addresses 0000 to 0093 each use 1 byte, is recorded.

As shown in Fig. 4, in byte 1 of the Media Definition Area, Mic_type, that is, identification information for identifying the data structure (format) of the memory in the IC chip 32, is recorded. Specifically, C5h is recorded.

As shown in Fig. 4, in bytes 2 to 5 of the Media Definition Area, Mic_manufacture_date, that is, the date of manufacture of the IC chip 32, is recorded. For example, when the date of manufacture of the IC chip 32 is March 10, 1997, 14:00, "97 03 10 14 h" is recorded in bytes 2 to 5 of the Media Definition Area. Since "97", "03", "10", and "14" each require 1 byte, the 4 bytes in bytes 2 to 5 are used.

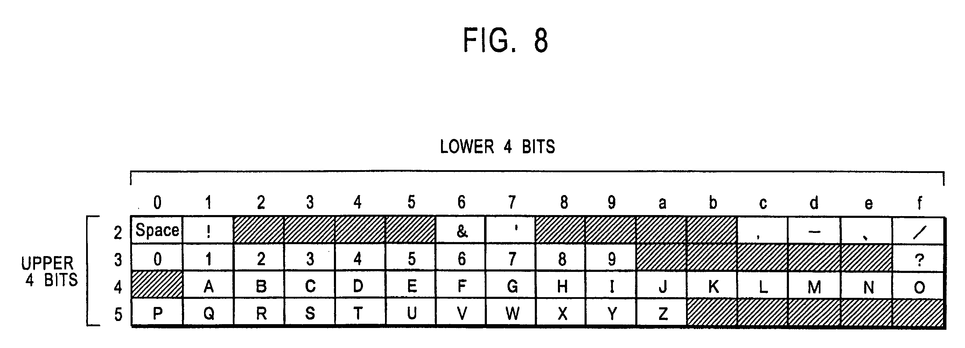

As shown in Fig. 4, in bytes 6 to 13 of the Media Definition Area, Mic_manufacture_date, that is, the manufacturing line name of the IC chip 32, is recorded. For example, when the manufacturing line that manufactured the IC chip 32 is "LINE-001", by using character codes as shown in the table in Fig. 8, a character string is designated by codes and recorded. In other words, in Fig. 8, 2 to 5 in the upper four bits are shown on the left side of the table, and lower four bits of 0, 1, 2, 3, 4, 5, 6, 7, 8, 9, a, b, c, d, e, and f are shown at the top of the table. To designate a character by code, a total of eight bits composed of the upper four bits and the lower four bits is required. 2 to 5 by the upper four bits and 0, 1, 2, 3, 4, 5, 6, 7, 8, 9, a, b, c, d, e, and f by the lower four bits respectively represent four values and sixteen values. Each numeral or character does not have any meaning.

By way of example, when the first character "L" of the manufacturing line name "LINE-001" is designated by codes, since "L" is positioned in the third row from top and the thirteenth column from left in the table, in the upper four bits, the numeral 4 corresponding to the third row from top is designated, and in the lower four bits, the character c corresponding to the third column from left is designated. In other words, "L" is designated by the code "4c" in the order of the upper four bits and the lower four bits. Similarly, "I" is designated by "49", "N" is designated by "4e", "E" is designated by "45", "-" is designated by "2D", "0" is designated by "30", and "1" is designated by "31". As a result of the designation, the manufacturing line name of the IC chip 32 is designated by the codes "4c 49 4e 45 2d 30 30 31" and is recorded in bytes 6 to 13 of the Media Definition Area.

The recordable manufacturing line name is limited to eight characters.

As shown in Fig. 4, in bytes 14 to 21 of the Media Definition Area, Mic_manufacture_plant_name, that is, the manufacturing plant name of the IC chip 32, is recorded. For example, when the manufacturing plant name is "MINOKAMO", based on a principle as already described with reference to Fig. 8, "MINOKAMO" is designated by the code "4d 49 4e 4f 4b 41 4d 4f" and is recorded in bytes 14 to 21 of the Media Definition Area. The recordable manufacturing plant name is limited to eight characters.

As shown in Fig. 4, in bytes 22 to 29 of the Media Definition Area, Mic_manufacture_name, that is, the manufacture company name of the IC chip 32, is recorded. For example, when the manufacture company name is "SONY", based on a principle as already described with reference to Fig. 8, "SONY" is designated by the codes "53 4f 4e 59 20 20 20 20" and is recorded. The recordable manufacturing plant name is limited to eight characters. When there are only four characters such as "SONY" (in the case of eight characters or less), the remaining four characters are designated by the code "20" representing space.

As shown in Fig. 4, in bytes 30 to 37 of the Media Definition Area, Mic_name, that is, the name of the IC chip 32, is recorded. The name recording principle is omitted since it is similar to that already described with reference to Fig. 8. The number of characters of the recordable name is limited to eight.

As shown in Fig. 4, in bytes 38 to 41 of the Media Definition Area, Casette_manufacture_date, that is, the manufacture date of the tape cassette 2 having the built-in IC chip 32, is recorded. A specific data-recording method is omitted since it is similar to that for the manufacture date of the IC chip 32 which is recorded in bytes 2 to 5 of the Media Definition Area.

As shown in Fig. 4, in bytes 42 to 49 of the Media Definition Area, Casette_manufacture_line_name, that is, the manufacturing line name of the tape cassette 2 having the built-in IC chip 32, is recorded. A specific data-recording method is omitted since it is similar to that for the manufacturing line name of the IC chip 32 which is recorded in bytes 6 to 13 of the Media Definition Area.

As shown in Fig. 4, in bytes 50 to 57 of the Media Definition Area, Casette_manufacture_plant_name, that is, the manufacturing plant name of the tape cassette 2 having the built-in IC chip 32, is recorded. A specific data-recording method is omitted since it is similar to that for the manufacturing line name of the IC chip 32 which is recorded in bytes 14 to 21 of the Media Definition Area.

As shown in Fig. 4, in bytes 58 to 65, Casette_manufacture_name, that is, the manufacturing company name of the tape cassette 2 having the built-in IC chip 32, is recorded. A specific data-recording method is omitted since it is similar to that for the manufacturing plant name of the IC chip 32 which is recorded in bytes 22 to 29 of the Media Definition Area.

As shown in Fig. 4, in bytes 66 to 73 of the Media Definition Area, Casette_Name (cassette name), that is, the name of the tape cassette 2 having the built-in IC chip 32, is recorded. A specific data-recording method is omitted since it is similar to that for the name of the IC chip 32 which is recorded in bytes 30 to 37 of the Media Definition Area.

Recording of all the data shown in the table in Fig. 4 is performed by big endian.

Next, Fig. 5 shows a continuation of the data structure of the Media Definition Area which is shown in Fig. 4.

As shown in Fig. 5, in bytes 74 to 81 of the Media Definition Area, Oem_customer_name is recorded. Specifically, "GENERIC" is designated by the character codes in Fig. 8 and is recorded. Although "GENERIC" is recorded as an OEM customer name in this embodiment, the name to be recorded is not limited to "GENERIC".

As shown in Fig. 5, in bytes 82 and 83 of the Media Definition Area, Physical tape characteristic ID is recorded. Specifically, in this embodiment, bytes 82 and 83 are left unused (recording nothing) having 0000h by default. Although bytes 82 and 83 of the Media Definition Area are unused in this embodiment, bytes 82 and 83 of the Media Definition Area are not always unused.

As shown in Fig. 5, in bytes 84 and 85 of the Media Definition Area, Maxmum_clock_frequency, that is, a maximum clock frequency, is recorded. Specifically, in this embodiment, in bytes 84 and 85 of the Media Definition Area, 0064h is recorded. Although this embodiment records 0064h in bytes 84 and 85 of the Media Definition Area, 0064h is not always recorded in bytes 84 and 85 of the Media Definition Area.

As shown in Fig. 5, in byte 86 of the Media Definition Area, Block size, that is, the size of one data block (= 16 bytes), is recorded. Specifically, in byte 86 of the Media Definition Area, 10h is recorded.

As shown in Fig. 5, in byte 87 of the Media Definition Area, Mic capacity, that is, the storage capacity of the built-in memory of the IC chip 32, is recorded. Specifically, in this embodiment, in byte 87 of the Media Definition Area, ODh is recorded.

As shown in Fig. 5, in bytes 88 and 89 of the Media Definition Area, Write protect top address, that is, the start address of a write-protect area, is recorded. Specifically, in this embodiment, 0000h is recorded in bytes 88 and 89 of the Media Definition Area.

As shown in Fig. 5, in bytes 90 and 91 of the Media Definition Area, Write protect count, that is, the number of bytes (208 bytes) of the write-protect area, is recorded. Specifically, in this embodiment, 00D0h is recorded in bytes 90 and 91 of the Media Definition Area.

As shown in Fig. 5, in byte 92 of the Media Definition Area, Re-issueing_count, that is, the number of times a read-only area is rewritten, is recorded. The number of times the read-only area is rewritten is recorded is counted up before rewriting is performed. In the case of initial writing, the number of times the read-only area is rewritten is 00h.

As shown in Fig. 5, in byte 93 of the Media Definition Area, Application ID, that is, an application defining ID, is recorded. Specifically, in this embodiment, FEh is recorded in byte 93 of the Media Definition Area.

As shown in Fig. 5, in bytes 94 and 95 of the Media Definition Area, Offset is recorded. Specifically, in this embodiment, 0000h is recorded in byte 93 of the Media Definition Area.

As shown in Fig. 5, in bytes 96 to 127 of the Media Definition Area, "signature1" is recorded. Specifically, "COPYRIGHT 2000 SONY CORPORATION," is designated in code form by using the character codes shown in Fig. 8, and is recorded.

As shown in Fig. 5, in bytes 128 to 159 of the Media Definition Area, "signature2" is recorded. Specifically, "ALL RIGHTS RESERVED." is designated in code form by using the character codes shown in Fig. 8, and is recorded.

Next, in bytes 160 to 191 of the Media Definition Area, PV rom area is recorded.

Recording of all the data shown in the table in Fig. 5 is performed by big endian, excluding the PV rom area.

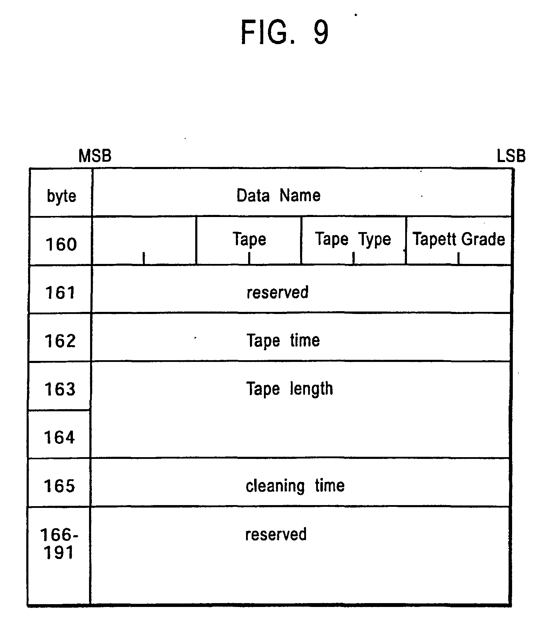

Details of the PV rom area are described with reference to Fig. 9.

In the table shown in Fig. 9, the left column indicates extractions from the central column "byte" in Fig. 5, and the right column indicates extractions from the right column "Data Name" in Fig. 5.

As shown in Fig. 9, in byte 160 of the Media Definition Area, Tape Type and Tape Grade are recorded. In byte 160 in Fig. 9 of the Media Definition Area, different pieces of data are recorded for every two bits, and the values of every two bits are used to record a tape type and a tape grade. As the field of byte 160 in Fig. 9 of the Media Definition Area shows, two least significant bits are used to record the tape grade, and two upper bits adjacent to the tape grade are used to record the tape type. When the record of the tape grade in two bits is "00", it represents "Consumer"; when it is "01", it represents "Non-Consumer"; when it is "10", it represents "Computer"; and when it is "11", it represents "reserved". In addition, when the record of the tape type in two bits is "00", it represents "ME"; when it is "01", it represents "Cleaning Tape"; when it is "10", it represents "reserved", and when it is "11", it represents "others".

As shown in Fig. 9, byte 161 and bytes 166 to 191 of the Media Definition Area are all used as undefined areas to record 00h, and nothing is recorded other than that.

As shown in Fig. 9, in byte 162 of the Media Definition Area, Tape time, that is, a possible time of recording onto the magnetic tape 31, is recorded. For example, in the case of the magnetic tape 31, onto which recording up to 62 minutes can be performed, 3Eh is recorded. The possible time of recording onto the magnetic tape 31 which is recorded here is a value which is calculated beforehand based on an actually measured tape length, and the error is within one minute.

As shown in Fig. 9, in bytes 163 and 164 of the Media Definition Area, Tape length, that is, the overall length of the magnetic tape 31, is recorded. When the overall length of the magnetic tape 31 is recorded in bytes 163 and 164 of the Media Definition Area, a value is recorded which is obtained by making a central value in tape-length specifications 32 times, dropping fractions of the product below decimal point, and transforming the processed product into a hexadecimal file form. In the case of recording the value, it is recorded in the Media Definition Area by little endian.

As shown in Fig. 9, in byte 165 of the Media Definition Area, Cleaning time coefficient is recorded. The cleaning time coefficient can be recorded in units of 0.1 times. 1.0 time is recorded as a cleaning time coefficient by default.

Next, Fig. 6 shows a continuation of the structure of the data of the Media Definition Area which is shown in Fig. 5.

As shown in Fig. 6, in byte 192 of the Media Definition Area, Manufacture_ID is recorded. For example, in this embodiment, the first letter "S" of "SONY" is designated in code form by using the character codes shown in Fig. 8, and is recorded as 53h.

As shown in Fig. 6, in byte 193 of the Media Definition Area, secondary_ID is recorded. For example, in this embodiment, "A" representing the tape cassette 2 is recorded.

As shown in Fig. 6, in byte 194 of the Media Definition Area, PV rom area checksum, that is, a checksum in a case in which data blocks having data block addresses 0160 to 0191 are each set to have one byte, is recorded.

As shown in Fig. 6, in bytes 195 and 196 of the Media Definition Area, PV rom area CRC, that is, CRC (Cyclic Redundancy Checking) for data blocks at data block addresses 0160 to 0191, is recorded.

As shown in Fig. 6, bytes 197 to 207 of the Media Definition Area are an undefined area in all of which 00h is recorded and nothing is recorded other than that.

As shown in Fig. 6, in bytes 208 to 211 of the Media Definition Area, the date of winding of the magnetic tape 31 is recorded. For example, when the date of winding of the magnetic tape 31 is March 10, 1997, 14:00, "97 03 10 14 h" is recorded.

As shown in Fig. 6, in bytes 212 to 219 of the Media Definition Area, the name of the winding line of the magnetic tape 31 is recorded. A method for recording the name is omitted since it is similar to that already described with reference to Fig. 8. The number of recordable characters as a name is limited to eight.

As shown in Fig. 6, in bytes 220 to 227 of the Media Definition Area, the shipping plant name of the cassette 2 is recorded. A method for recording the name is omitted since it is similar to that already described with reference to Fig. 8. The number of recordable characters as a name is limited to eight.

As shown in Fig. 6, in bytes 228 to 243 of the Media Definition Area, the plot number of the magnetic tape 31 is recorded. A method for recording the name is omitted since it is similar to that already described with reference to Fig. 8. The number of recordable characters as a name is sixteen.

As shown in Fig. 6, in bytes 244 to 251 of the Media Definition Area, the error rate value of the tape cassette 2 is recorded. A method for recording the name is omitted since it is similar to that already described with reference to Fig. 8. The number of recordable characters as a name is eight.

As shown in Fig. 6, bytes 252 to 303 of the Media Definition Area are an undefined area in all of which 00h is recorded and nothing is recorded other than that.

Recording of all the data shown in the table in Fig. 6 is performed by big endian.

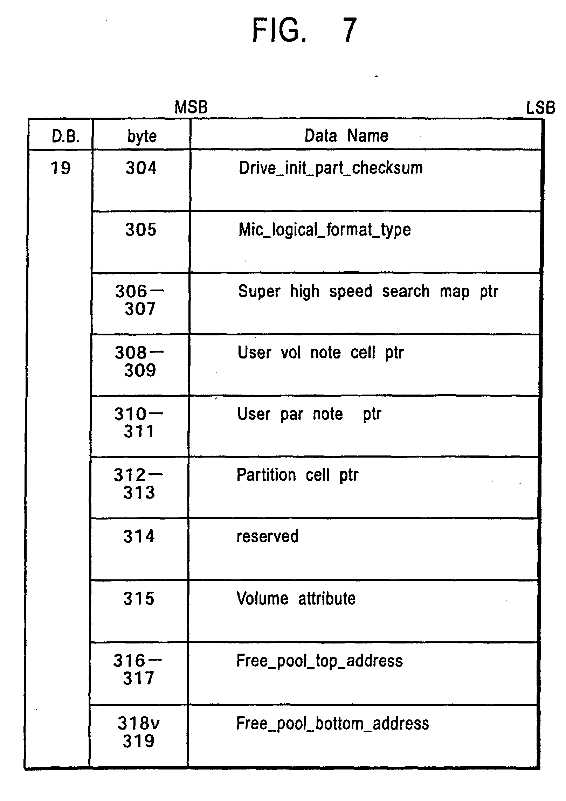

Next, Fig. 7 shows a continuation of the data structure of the Media Definition Area shown in Fig. 6.

As shown in Fig. 7, in byte 304 of the Media Definition Area, Drive_init_part_checksum is recorded. In this embodiment, byte 304 of the Media Definition Area is left unused and nothing is recorded.

As shown in Fig. 7, in byte 305 of the Media Definition Area, Mic_logical_format_type is recorded. In shipping of the tape cassette 2, F0h is recorded in byte 305 of the Media Definition Area, and in formatting of the tape cassette 2, the record is overwritten by F1h.

As shown in Fig. 7, in bytes 306 and 306 of the Media Definition Area, Super high speed search map ptr (pattern) is recorded. Bytes 306 and 307 are unused, and specifically 1FFFh is recorded therein.

As shown in Fig. 7, in bytes 308 and 309 of the Media Definition Area, User vol note cell ptr (pattern) is recorded. Specifically, in bytes 308 and 309 of the Media Definition Area, 0140h is recorded.

As shown in Fig. 7, in bytes 310 and 311 of the Media Definition Area, in bytes 310 and 311 of the Media Definition Area, 1FFFh is recorded.

As shown in Fig. 7, in bytes 312 and 313 of the Media Definition Area, Partition cell ptr (pattern) is recorded. Specifically, in bytes 312 and 313 of the Media Definition Area, 1FFFh is recorded.

As shown in Fig. 7, byte 314 of the Media Definition Area is used as Reserved, that is, an undefined area.

As shown in Fig. 7, in byte 315 of the Media Definition Area, Volume attribute is recorded. Specifically, in byte 315 of the Media Definition Area, 00h is recorded.

As shown in Fig. 7, in bytes 316 and 317 of the Media Definition Area, Free_pool_top_address, that is, the start address of the application area, is recorded. Specifically, in bytes 316 and 317 of the Media Definition Area, 0140h is recorded.

As shown in Fig. 7, in bytes 318 and 319 of the Media Definition Area, Free_pool_bottom_address, that is, the address of the bottom of the application area, is recorded. Specifically, in bytes 318 and 319 of the Media Definition Area, 1FFFh is recorded in bytes 318 and 319 of the Media Definition Area.

Recording of all the data shown in the table in Fig. 7 is performed by big endian.

Next, details of the data structure (format) of the Application Management Information Area in Fig. 3 are described. The Application Management Information Area is an area for recording information for use in an application, such as the present area of the memory in use, the end position of writing on the magnetic tape 31, and an updating date and time. At the time of shipping from the plant, 00h is recorded in all this area. By performing formatting, IDs are assigned to each area, and the area can be made usable. In the IC chip 32, data block addresses correspond to the areas, respectively.

In the first byte of each data block, an ID (Block ID) that indicates what the data of the block represents is recorded.

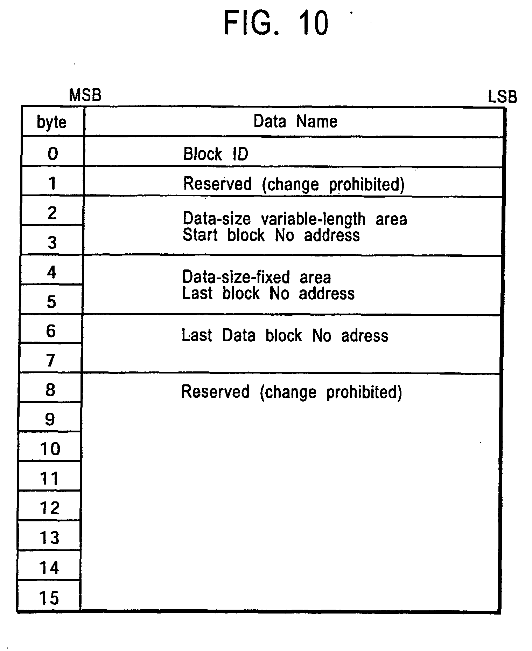

Application Area Information Field, recorded at data block address 20 of the Application Management Information Area, declares the sizes of the areas, Data-size-fixed Area and Data-size Variable Area (described later), and is used to record the present amount of use of each area. The detailed data structure of the Application Area Information Field is described with reference to Fig. 10.

In the table in Fig. 10, in the left column, one data block of the Application Area Information Field, that is, 16 bytes are indicated as bytes 0 to 15. In the same Figure, the right column shows recorded Data Names corresponding to the bytes in the left column.

In byte 0 in Fig. 10, Block ID is recorded. In the case of the tape cassette 2 (hereinafter referred to as the virgin tape) in unused state, 00h is recorded. After formatting is performed, 04h which represents the Application Area Information Field is recorded.

Byte 1 and bytes 8 to 15 in Fig. 10 are undefined areas in all of which 00h is recorded, and are made impossible to be overwritten.

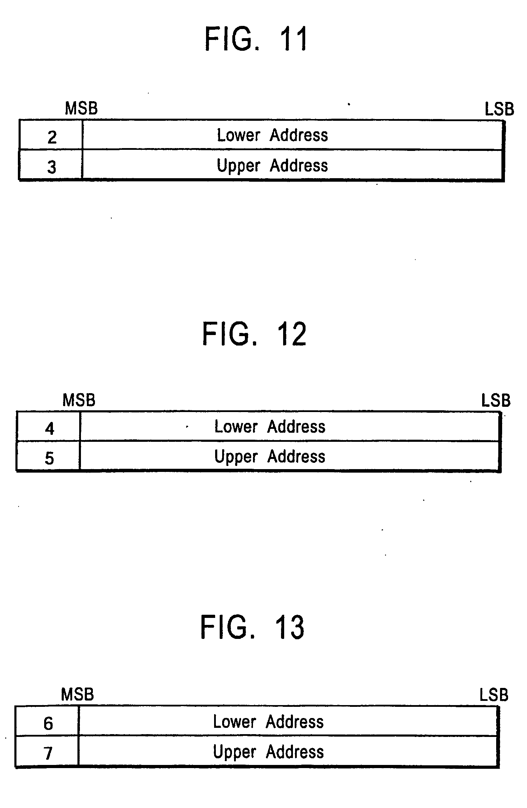

In byte 2 and byte 3 in Fig. 10, Data-size variable-length area start block No. address is recorded. In Fig. 11, byte 2 and byte 3 are shown extracted. In Fig. 11, the left column shows byte numbers similarly to the left column in Fig. 10, and the right column shows positions in which recorded upper address and lower address are recorded. The Data-size variable-length area start block No. address is composed of two bytes and is recorded by little endian.

The Data-size variable-length area start block No. address indicates the start address of the Data-size variable-length area. This determines partitions (the size of the Data-size-fixed Area and the size of the Data-size Variable Area). When the Data-size variable-length area start block No. address has already been recorded, in accordance with partitions designated thereby, the recording/playback apparatus 1 uses each area. Although it is impossible to change the Data-size variable-length area start block No. address while the tape cassette 2 is being used, the address can be changed by performing re-formatting.

The Data-size variable-length area size can be found by adding to one to a value obtained by subtracting the start address of the Data-size variable-length area from the maximum memory size of the IC chip 32.

The Data-size-fixed Area can be found by adding one to a value obtained by subtracting the end address of the Media Definition Area from the start address of the Data-size variable-length area.

In byte 4 and byte 5 in Fig. 10, Data-size-fixed area Last block No. address is recorded. Byte 4 and byte 5 in Fig. 10 are shown extracted in Fig. 12. Fig. 12 shows the recording positions of an upper address and a lower address in the case of recording the Data-size-fixed area Last block No. address.

The Data-size-fixed area Last block No. address consists of two bytes and is recorded by little endian. In this area, the last block number address of the Data-size-fixed area being presently used. The Data-size-fixed area Last block No. address is updated whenever an area in use is changed. When this area is not used, 00h is recorded.

In byte 6 and byte 7 in Fig. 10, Last Data block No. address is recorded. In Fig. 13, byte 6 and byte 7 in Fig. 10 are shown extracted. Fig. 13 shows the recording positions of an upper address and a lower address in the case of recording the Last Data block No. address.

The Last Data block No. address consists of two bytes and is recorded by little endian. In this area, the last data block number address being presently used in the application is recorded. The Last Data block No. address is updated whenever an area in use is changed. When this area is not used, 00h is recorded.

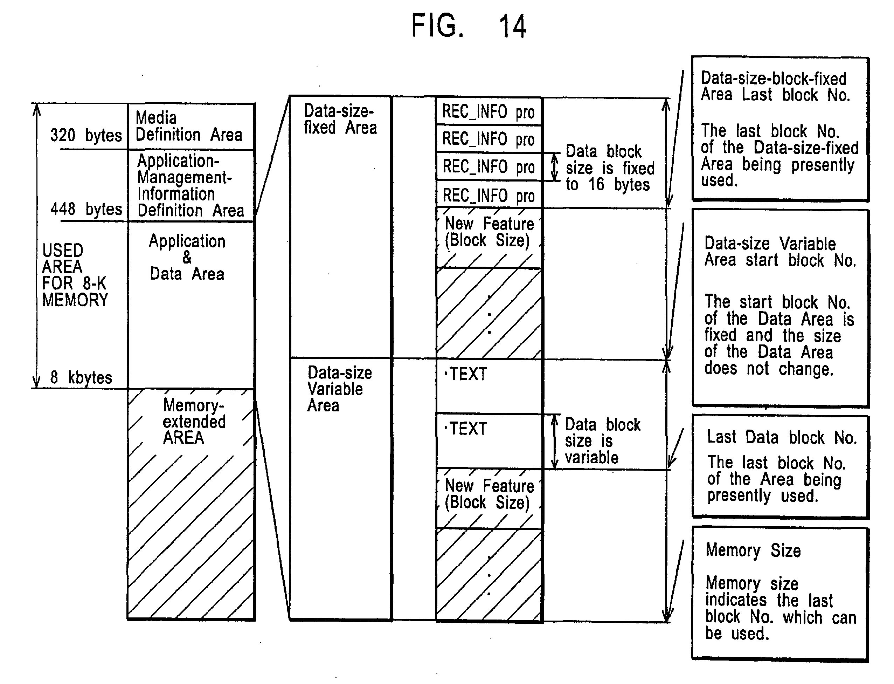

Here, the Data-size-fixed area and the Data-size variable-length area are described with reference to Fig. 14.

The leftest side of Fig. 14 shows the proportions to the memory of the IC chip 32 of the Media Definition Area, the Application-Management-Information Definition Area, and the Application & Data Area. A freely usable area, that is, the Application & Data Area, is an area obtained by subtracting the Media Definition Area and the Application-Management-Information Definition Area from the memory area. The Application & Data Area is divided into the Data-size-fixed Area and the Data-size Variable Area, as the second part from left in Fig. 14 shows. The Data-size-fixed Area has a data size of 1 D.B., that is, 16 bytes, and has a record of an always-fixed amount. In the Data-size Variable Area, one having a data size more than 16 bytes is recorded.

In the Data-size Variable Area, creation or deletion is performed with 4 D.B. (64 bytes) used as a unit called 1 PACK. Thus, in order that data having a size which is not less than 64 bytes may be stored in memory, an area for 2 PACKS or more is needed.

The Data-size Variable Area can store information (such as a title) to be added to recording information to be stored in the Data-size-fixed Area.

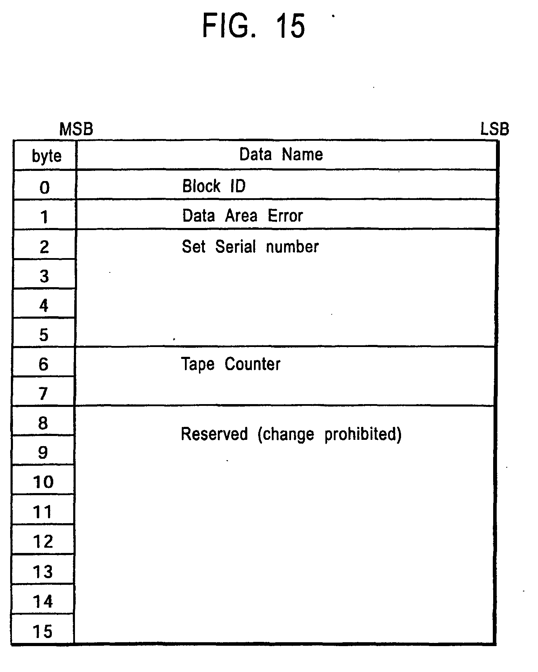

In the Application Management Information Area, the data structure of the Memory Information Field at data block address 21 is described with reference to Fig. 15.

In Fig. 15, in the left column, 1 D.B. of the Memory Information Field, that is, 16 bytes are indicated as 0 to 15. In this Figure, the right column shows recorded data names corresponding to the bytes in the left column.

In byte 0 in Fig. 15, Block ID is recorded. In the case of a virgin tape, 00h is recorded. After formatting, 05h representing the Memory Information Field is recorded.

In byte 1 in Fig. 15, a data-area error is recorded. The data-area error is formed by one byte. Each recording/playback apparatus 1 has a treatable limit memory capacity. For example, in a recording/playback apparatus 1 that can deal with a maximum of 8 Kbytes, when the IC chip 32, which has a memory of 8 Kbytes or more, is built into the tape cassette 2, reading from the IC chip 32 of the tape cassette 2 can be only performed up to 8 Kbytes, or recording to the IC chip 32 can be only performed up to 8 Kbytes. However, recordable (readable) 8-Kbyte data in the IC chip 32 includes data which is associated with other data in the IC chip 32, and rewriting within 8 Kbytes may cause inconsistency with related information. Accordingly, when the recording/playback apparatus 1 writes data into the IC chip 32 of the tape cassette 2 having a built-in memory which has a capacity exceeding a treatable memory capacity, it records a possibility that the related information may be broken, leaving a history of the data-area error. The logic is H, active. By re-formatting the IC chip 32, the data-area error can be erased.

In bytes 2 to 5 in Fig. 15, Set Serial number is recorded. The recording position of the Set Serial number is shown in Fig. 16. In Fig. 16, the left column is identical to the left column in Fig. 15. In Fig. 16, the lower part of a serial number is recorded in byte 2, the upper part of the serial number is recorded in byte 3, the lower part of model information is recorded in byte 4, and the upper part of the model information is recorded in byte 5.

In byte 2 and byte 3, the serial number of the recording/playback apparatus 1 is recorded, and in byte 4 and byte 5, identification information for identifying the model of the recording/playback apparatus 1 is recorded. Little endian is used for recording these. In a virgin tape state, 00h is recorded. In formatting, the model identification information and the serial number are recorded and are prevented from being erased thereafter.

In byte 6 and byte 7 in Fig. 15, Tape Counter is recorded. The recording position of the Tape Counter is shown in Fig. 17. In Fig. 17, the left column is identical to the left column in Fig. 15. In Fig. 17, the lower part of the Tape Counter is recorded in byte 6, and the upper part of the Tape Counter is recorded in byte 7.

The Tape Counter consists of two bytes and is recorded by little endian. The Tape Counter is updated such that it is incremented by one whenever the virgin tape is formatted. It does not have 0000h, and after its value exceeds FFFFh, its value starts at 0001h. Its value is 0000h in the virgin tape state. Counter values are recorded in formatting and are prevented from being erased.

Bytes 8 to 15 in Fig. 15 are used as an undefined area and 00h is recorded therein, and it cannot be changed to another value.

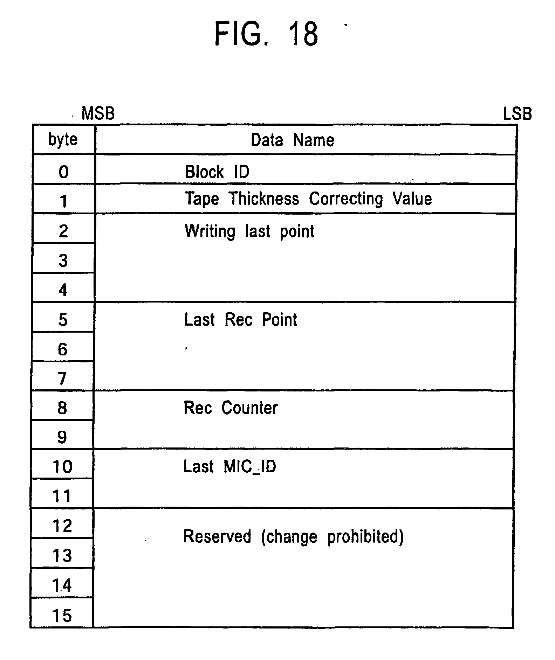

Details of the data recorded in the Media Information Field at data block address 22 in the Application Management Information Area are described with reference to Fig. 18.

In Fig. 18, in the left column, 1 D.B. of the Media Information Field, that is, 16 bytes are indicated by bytes 0 to 15. In the same Figure, in the right column, recorded data names are shown correspondingly to the bytes in the left column.

In byte 0 in Fig. 18, Block ID is recorded. In the case of the virgin tape, 00h is recorded. After formatting, 06h representing the Media Information Field is recorded.

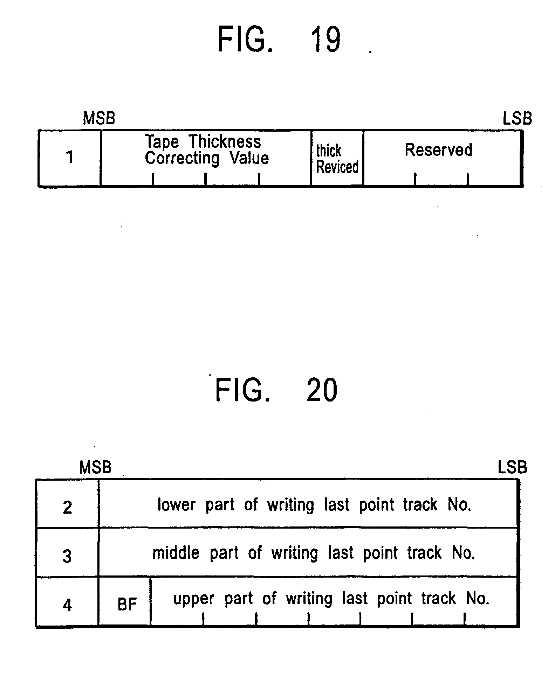

In byte 1 in Fig. 18, Tape Thickness Correcting Value is recorded. In Fig. 19, the portion of byte 1 in Fig. 18 is shown extracted. In Fig. 19, in four bits from the most significant bit (MSB), the Tape Thickness Correcting Value is recorded, and in a lower adjacent bit, a corrected flag (thickReceived) is recorded. The thickness of the magnetic tape 31 is described as Tape Thickness in the PV rom area. In the case of using correcting data for further increasing precision, the Tape Thickness Correcting Value is recorded in this area. The logic of the corrected flag is H, active, and H represents a corrected state.

In bytes 2 to 4 in Fig. 18, Writing last point track number is recorded. In Fig. 20, the portion of bytes 2 to 4 in Fig. 18 are shown extracted. In Fig. 20, the lower part of the Writing last point track number is recorded in byte 2, the middle part of the Writing last point track number is recorded in byte 3, and the upper part of the Writing last point track number is recorded in byte 4.

The record of the Writing last point track number consists of three bytes and is performed by little endian. In this area, the last track number of tape data recorded on the magnetic tape 31 is recorded. In the virgin tape state, 00h is recorded in this area. When data is recorded on the magnetic tape 31, the Writing last point track number is recorded. A blank flag (BF) is assigned to the most significant bit of byte 4. The blank flag indicates that the recorded track number is an estimated value and that the logic of this flag is H, active. H represents an estimated value.

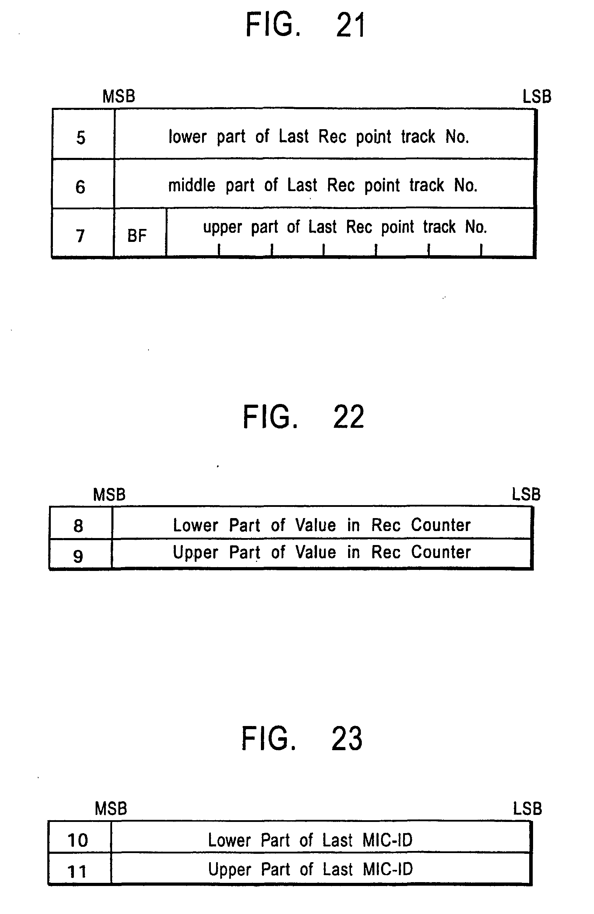

In bytes 5 to 7 in Fig. 18, Last Rec Point track number (last record point track number) is recorded. In Fig. 21, the portion of bytes 5 to 7 is shown extracted. In Fig. 21, the lower part of the Last Rec Point track number is recorded in byte 5, the middle part of the Last Rec Point track number is recorded in byte 6, and the upper part of the Last Rec Point track number is recorded in byte 7.

The record of the Last Rec Point track number consists of three bytes, and is performed by little endian. In this area, the recording-end track number of tape data temporally finally recorded on the magnetic tape 31 is recorded. In the virgin tape state, 00h is recorded in this area. When data is recorded onto the magnetic tape 31, the Last Rec Point track number is recorded. A blank flag is assigned to the most significant bit of byte 7. The blank flag indicates that the recorded track number is an estimated value and that the logic of this flag is H, active. H represents an estimated value.

In byte 8 and byte 9 in Fig. 18, Rec Counter (record counter) is recorded. In Fig. 22, the portion of bytes 8 and 9 in Fig. 18 is shown extracted in Fig. 22. In Fig. 22, the lower part of the Rec Counter is recorded in byte 8, and the upper part of the Rec Counter is recorded in byte 9.

The record of the record counter consists of two bits and is performed by little endian. In this area, a counter is stored which is incremented by one whenever the recorded data is updated. In the virgin tape state, 00h is recorded in this area. The count is incremented by one whenever data is recorded onto the magnetic tape 31 or whenever all the data on the magnetic tape 31 is erased to update the recorded data. However, when the counter exceeds FFFFh, it returns to 0000h and continues counting.

In byte 10 and byte 11 in Fig. 18, Last MIC-ID is recorded. In Fig. 23, the portion of byte 10 and byte 11 in Fig. 18 is shown extracted. In Fig. 23, the lower part of the Last MIC-ID is recorded in byte 10, and the upper part of the Last MIC-ID is recorded in byte 11. The MIC-ID is an ID that is written on the magnetic tape 31 for differentiation from other records by assigning a unique ID to a 1-cut record.

The record of the Last MIC-ID consists of two bytes and is performed by little endian. In this area, the last MIC-ID used in the tape cassette 2 is recorded. In the virgin tape state, 00h is recorded in this area. Whenever the recording/playback apparatus 1 records data onto the magnetic tape 31, updating to an MIC-ID used in recording is performed. When the MIC-ID exceeds FFFFh, it returns to 0000h.

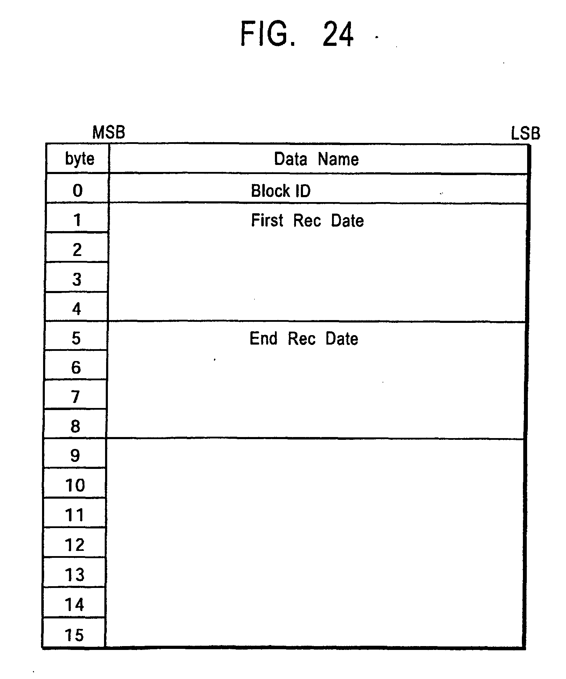

Next, data recorded in the Record Information Field at data block address 23 in Fig. 3 is described with reference to Fig. 24.

In Fig. 24, in the left column, one data block of the Record Information Field, that, 16 bytes are indicated by bytes 0 to 15. In the same Figure, in the right column, recorded data names are shown correspondingly to the bytes in the left column.

In byte 0 in Fig. 24, Block ID is recorded. In the case of the virgin tape, 00h is recorded. After formatting, 07h representing the Record Information Field is recorded.

In bytes 1 to 4 in Fig. 24, First Rec Date (first record date), that is, the oldest year, month, day, hour, and minute, among date recordings in the MIC, is recorded. This area consists of four bytes and recording is performed by little endian. In the virgin tape state, this area has 00h. After the oldest data recorded on the magnetic tape 31 is erased, the date of the next oldest data is recorded. Erasure of all the data on the magnetic tape 31 also erases the record in this area, and this area returns to 00h.

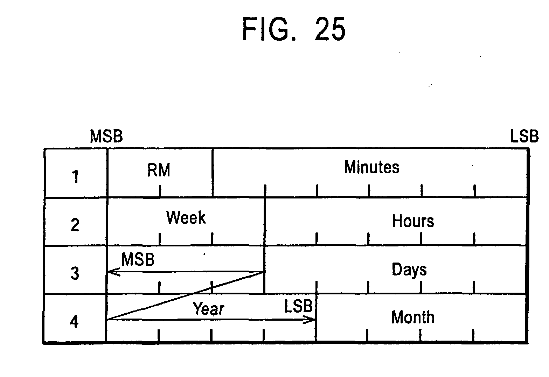

In Fig. 25, bytes 1 to 4 in Fig. 24 are shown extracted. In Fig. 25, in the most significant bit to bit 2 of byte 1, Recording Mode (RM) is recorded, and in six bits from a lower adjacent bit to the least significant bit, "Minutes" is recorded. The recording Mode is information for identifying the type of the data recorded on the magnetic tape 31. When the recorded information is "00B", it represents a video mode, when it is "01b", it represents an audio mode, when it is "10b" it represents a video mode and an audio mode, and when it is "11b", it represents a reproduction mode. Recording the "Minutes" uses 00h to 3Bh, and 3Fh indicates that no information is recorded.

In Fig. 25, in the most significant bit to bit 3 of byte 2, "Week" is recorded and in five bits from a lower adjacent bit to the least significant bit, "Hours" is recorded. For identifying the "Week", "0" represents Sunday, "1" represents Monday, "2" represents Tuesday, "3" represents Wednesday, "4" represents Thursday, and "6" represents Saturday. Recording of the "Hours" uses 00h to 17h, and 1Fh indicates that no information is recorded.

In five bits from the most significant bit of byte 3, "Days" is recorded. Also, in four bits from the least significant bit of byte 4, "Month" is recorded. Recording of the "Month" uses 1h to Ch. In the most significant bit to bit 3 of byte 3 and in four bits from the most significant bit of byte 4, "Year" is recorded.

In bytes 5 to 8 in Fig. 24, "End Rec Date" (End Record Date), that is, the newest year, month, hours, and minutes among dates in the MIC, are recorded. In the virgin tape state, 00h is recorded in this area. Recording new data on the magnetic tape 31 also updates date data recorded in this area. A specific data structure is omitted since it is identical to that of the First Record Date.

Bytes 9 to 15 in Fig. 24 are an undefined area and 00h is recorded therein.

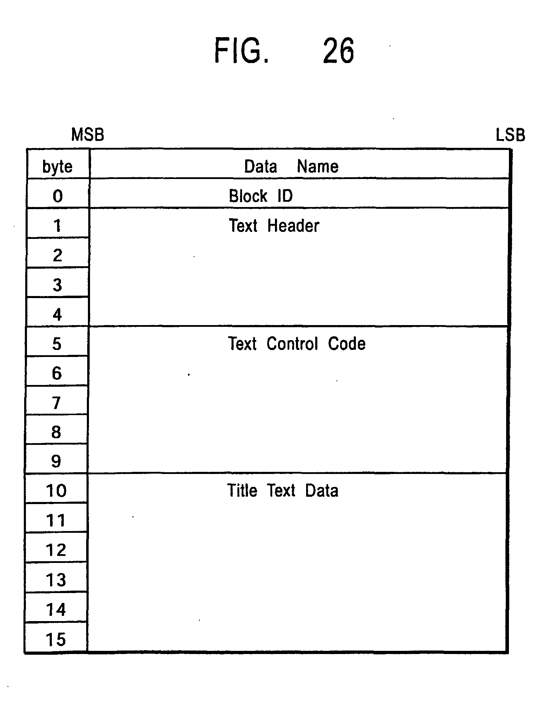

Next, details of data recorded in 64-byte "Label Information Field" at data block addresses 24 to 27 in the Application Management Information Area in Fig. 3 are described with reference to Fig. 26. The Label Information Field is a field in which a label named for the tape cassette 2 by the user is recorded.

In Fig. 26, in the left column, 16 bytes corresponding to the data block at data block address 24 of the Label Information Field are indicated by bytes 0 to 15. In the same Figure, in the right column, recoded Data Names are shown correspondingly to the bytes in the left column.

In byte 0 in Fig. 26, Block ID is recorded. In the case of the virgin tape, 00h is recorded. After formatting, 08h representing the Label Information Field is recorded.

In bytes 1 to 4 in Fig. 26, Text Header, that is, the character codes of text designated when recording a tape cassette name, are recorded. This area consists of four bytes. In the virgin tape state, this area has 00h. When a label is input therein, character codes are recorded, and when the label is erased, the record in this area is also erased.

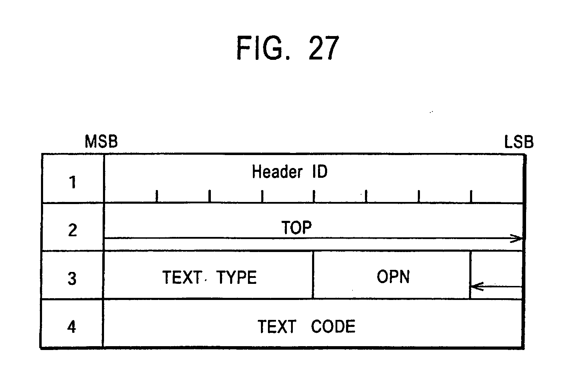

Detailed data structure of bytes 1 to 4 in Fig. 26 is described with reference to Fig. 27.

In Fig. 27, the portion of bytes 1 to 4 in Fig. 26 is shown extracted. In Fig. 27, in byte 1, Header ID is recorded. The TITLE TEXT HEADER of PACK HEADER ID in CHIME format is set as the Header ID. In the areas of the entire byte 2 and the least significant bit to bit 1 of byte 3, TDP, that is, the length (byte units) of text data recorded as the label of the tape cassette 2, is recorded. In the areas of the most significant bit to bit 4 of byte 3, TEXT TYPE is recorded. Specifically, Fh is recorded. In a lower 3-bit area adjacent to the area in which the TEXT TYPE is recorded, OPN is recorded. Specifically, 8h is recorded.

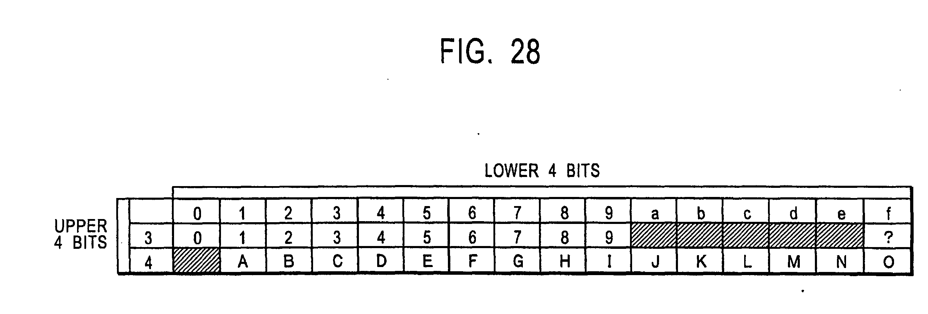

In byte 4, TEXT CODE, that is, character codes, are recorded. The character codes mean a method for designating by codes the text (character string) already described with reference to Fig. 8. The character codes shown in Fig. 8 are used in a recording/playback apparatus 1 for use in overseas. However, in code designation in accordance with the table shown in Fig. 8, alphabets (capital letters), numerals, and some symbols can be designated by codes, but hiragana and kanji cannot be designated by codes. In a recording/playback apparatus 1 for use in Japan, by performing code designation based on the tables shown in Fig. 28 to Fig. 30, hiragana and some kanji can be designated by codes and can be recorded.

Code designation for use in Japan requires two bytes per character. In the table in Fig. 28, alphabets and numerals can be designated by codes. When code designation is performed based on this table, an upper byte needs to be set to 23h. A lower byte can be selected from the table in accordance with a character to be designated. For example, in the case of code designation based on the table in Fig. 28, if "A" is recorded, by designating the code 2341h, "A" can be designated. In other words, "23" indicates the upper byte, and "41" indicates the lower byte.

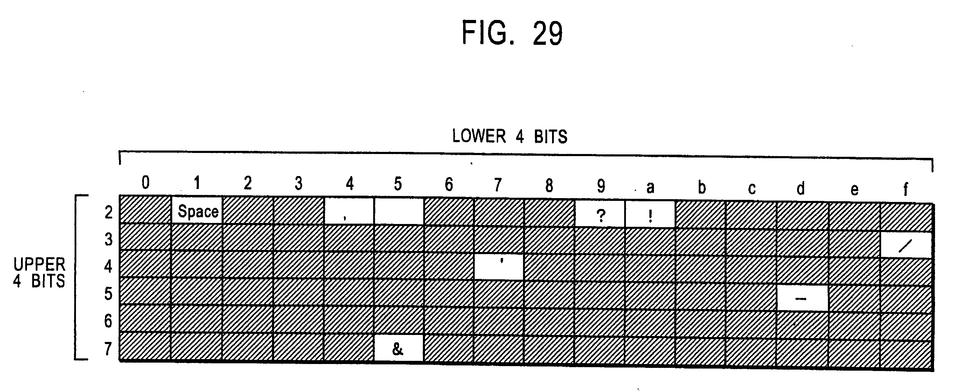

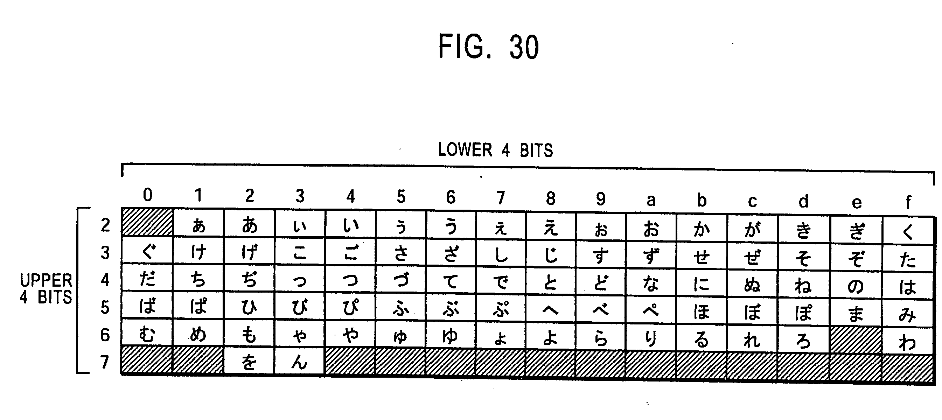

Similarly, in the case of code designation of some symbols, code designation can be performed based on the table in Fig. 29. However, to designate this table, it is necessary to set 21h in the upper byte. In addition, in the case of code designation of hiragana, code designation can be performed based on the table in Fig. 30. However, to designate this table, it is necessary to set 24h in the upper byte.

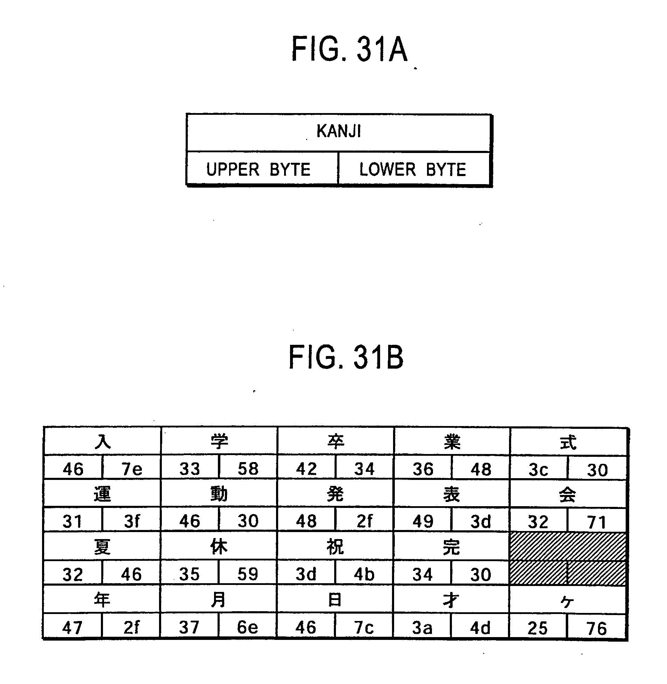

Moreover, in the case of designating some kanji, kanji can be designated based on the table in Fig. 31B. A way of viewing the table shown in Fig. 31B is shown in Fig. 31A. In the upper line in Fig. 31A, "KANJI" is shown, and this field indicates kanji to be designated. Also, in the lower line in Fig. 31A, "UPPER BYTE" and "LOWER BYTE" are shown in sequential order from left, and these fields indicate the codes of the upper byte and the lower byte that designate a kanji. For example, when " 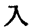 " (the top left end in the table in Fig. 31B) is designated by codes, 467eh is set.

As described above, by inputting the tape cassette name of the tape cassette 2 by selecting desired characters from characters including hiragana and some kanji, the name is designated by codes based on the above tables and is recorded.

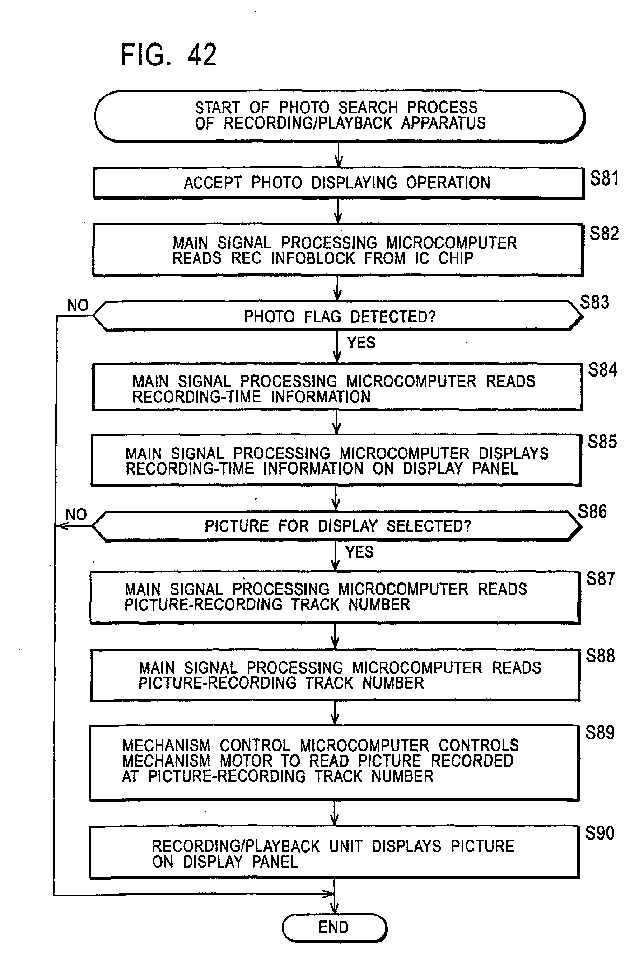

In the TEXT CODE field in Fig. 27, 42h is recorded in the case of use in overseas, while 4bh is recorded in the case of use in Japan.

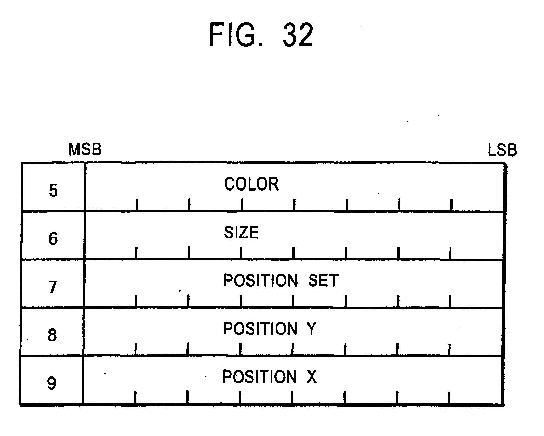

Details of the data structure of the Text Control Code in byte 9 in Fig. 26 are shown extracted in Fig. 32. In Fig. 32, in byte 5, color-designating information concerning the text indicating the tape cassette name is recorded. Specifically, when 80h is recorded in byte 5, "block" is represented, when 81h is recorded, "red" is represented, when 82h is recorded, "green" is represented, when 83h is recorded, "yellow" is represented, when 84h is recorded, "blue" is represented, when 85h is recorded, "magenta" is represented, when 86h is recorded, "cyan" is represented, and when 87h is recorded, "white" is represented.

In byte 6 in Fig. 32, a designated size of characters to be displayed. Specifically, the case of 89h designates standard size characters, and the case of 8Ah designates characters having double height and width size. In byte 7 in Fig. 32, designated POSITION SET is recorded. Only when 1Ch is recorded can the characters be displayed.

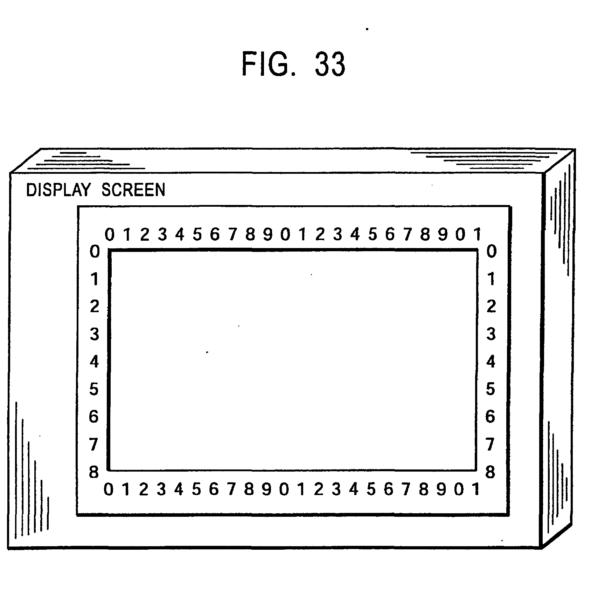

In byte 8 and byte 9 in Fig. 32, designated X- and Y-coordinates on the display panel 18 for displaying characters are recorded, respectively. Specifically, in the case of the record of the designated Y-coordinate in byte 8, a value between 41h and 49h is recorded. Nine values from 41h to 49h indicate that, from nine rows, a character-displaying Y-coordinate can be designated, as shown in Fig. 33. In other words, Fig. 33 shows the displayed positions of characters which are displayed on the display panel 18. In Fig. 33, characters are displayed in an innermost rectangle. Numerals 0 to 8 are vertically assigned outside the frame of the innermost rectangle. By designating a predetermined value from nine values from 41h to 49h, a character is displayed in the position of a corresponding numeral among the nine numerals from 0 to 8.

An X-coordinate recorded in byte 9 in Fig. 32 is set to 40h.

Referring back to Fig. 26, in byte 10 and thereafter in Fig. 26 and at data block addresses 25 to 27, Title Text Data is recorded. In this area, the label of the tape cassette 2 which is designated by codes is recorded. In other words, based on the tables shown in Fig. 8, and Fig. 28 to Fig. 31B, the character codes of the label are designated by codes and are recorded as the Title Text Data in this area. This area continues to data block address 27, and 54 bytes of text data can be recorded. In the area from byte 10 of block number 24 to data block address 27, 00h is recorded in the virgin tape state. When the tape cassette name is input by the user, data that is designated by codes based on the name is recorded, and when an operation such as label erasure is accepted, the recorded data is erased.

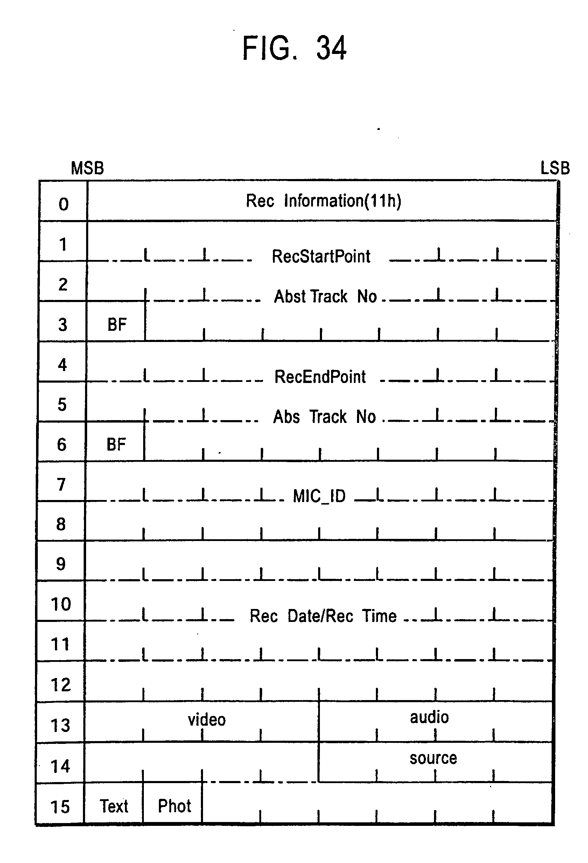

Next, a recording area for the data recorded in the Application & Data Area in Fig. 3 is described with reference to Fig. 34.

Data for recording is treated with 16 bytes as the minimum unit and 16 bytes as 1 D.B., although this is a repetition. A collection of a plurality of data blocks forms a meaningful group of data which is called 1 PACK. In the first byte of a data block, an ID (Block ID) that indicates what the data block represents.

Also, in the Data-size-fixed Area, 1 D.B. is treated as 1 PACK. In the Data-size-fixed Area, REC INFORMATION BLOCK (record information block) is recorded. In the Data-size Variable Area, 64 bytes (= 4 D.B.) are treated as 1 PACK. In the start of the first block of the first PACK, a Block ID and a 4-byte control code are recorded.

The record information block is a field in which information, such as a recording-start track number, recording-end track number, and recording date and time of the data recorded on the magnetic tape 31, is recorded. Recording of the data in the record information block is performed by little endian. The record information block is described with reference to Fig. 34.

Fig. 34 shows the recording information of one piece of data that is recorded onto the magnetic tape 31 by the recording/playback apparatus 1. In Fig. 34, the left side shows bytes, and the right side shows data corresponding to the bytes. In byte 0, Rec Information representing the record information block is recorded. Specifically, 11h is recorded. In bytes 1 to 3 in Fig. 34, RecStartPoint Abs Track No (record-start-point absolute track number), that is, the recording-start track number of the data onto the magnetic tape 31, is recorded. The data structure is similar to that of the Writing last point track number in the Media Information Field. The record-start-point absolute track number is recorded by little endian.

In Fig. 34, in bytes 4 to 6, RecEndPoint Abs Track No (record-end-point absolute track number), that is, the recording-end track number of the data recorded onto the magnetic tape 31, is recorded. The data structure is similar to that of the Writing last point track number in the Media Information Field. The record-end-point absolute track number is recorded by little endian.

In Fig. 34, in byte 7 and byte 8, MIC-ID is recorded. The MIC-ID is a unique ID that is assigned to 1 cut of record in order to establish differentiation from other record. The MIC-ID is also recorded onto the magnetic tape 31 when data is recorded onto the magnetic tape 31. The data structure is similar to that of the last MIC-ID in the Media Information Field. The MIC-ID is recorded by little endian.

In Fig. 34, in bytes 10 to 12, Rec Data/Rec Time (record data/record time), that is, a date and time, and date information concerning the data recording onto the magnetic tape 31, are recorded. The data structure is similar to that of (the first record data) of the Record Information Field. The record data/record time is recorded by little endian.

In Fig. 34, in byte 13, in the area of the most significant bit to the upper fourth bit, Video, that is, a recording method for a video signal in the data recorded on the magnetic tape 31, is recorded. For example, when the recording method is MNPEG2 TS, 0000 is recorded. When the recording method is unknown, 1111 is recorded in this area.

In Fig. 34, in the 4-bit area of the least significant bit to the upper fourth bit, audio, that is, a recording method for an audio signal in the data recorded on the magnetic tape 31, is recorded. For example, when the recording method is MPEG1 layer1/layer2, 0000 is recorded, and when the recording method is MPEG3, 0001 is recorded. When the recording method is unknown, 1111 is recorded in this area.

In Fig. 34, in the area of the least significant bit and the upper fourth bit, source, that is, the content in recoding mode of the data recorded on the magnetic tape 31, is recorded. For example, when the data recorded on the magnetic tape 31 is one recorded by the recording/playback apparatus 1 or in line-input mode, 0000 is recorded in this area.

In Fig. 34, in the most significant bit of byte 15, "Text" is shown. This has a record of whether or not text data is included in a text block corresponding to the information of a record information block. The logic is H, active, and H is used to indicate that the text data is included.

In Fig. 34, in the second bit from the most significant bit of byte 15, Photo, that is, data of whether or not corresponding data recorded on the magnetic tape 31, is a photo record (still picture record on the magnetic tape 31) is recorded.

In step S13 in Fig. 2, content as described above is recorded in the record information block. The information recorded in the record information block is hereinafter referred to as recorded information.

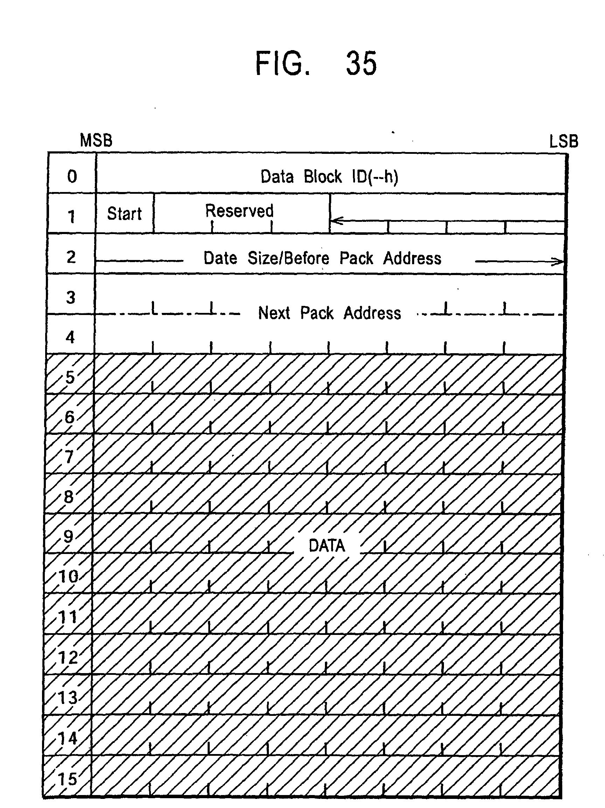

Next, the data structure of the Data-size Variable Area is described with reference to Fig. 35 to Fig. 37.

In the Data-size Variable Area, data is treated with 64 bytes (4 data blocks) as 1 PACK. In 1 PACK, in the first five bytes of the first data block, PACK HEADER that indicates a data-used area is recorded. The data structure of the PACK HEADER is shown in Fig. 35.

In Fig. 35, in byte 0, Data Block ID is recorded. In byte 1, in its most significant bit area, Start, that is, a Start bit, is recorded. In other words, in this area, it is recorded whether or not the PACK corresponds to the start of data. In this area, it is recorded whether the PACK is either the first PACK among one or more data-recorded PACKS or the second or subsequent PACK. Specifically, when the PACK is the first PACK of data, "1" is recorded. When the PACK is the second or subsequent PACK, "0" is recorded.

In Fig. 35, the lower second bit from the most significant bit to bit 4 of byte 1 are an undefined area. In a lower adjacent bit to the least significant bit and all the bits of byte 2, Data SIZE/Before Pack Address is recorded. When the record in the start bit is "1", that is, this PACK is the first PACK, in the area of the Data SIZE/Before Pack Address, the total number of PACKS used by all the data is recorded. The maximum number of PACKS used by all the data is 4096. When the record in the start bit is "0", that is, this PACK is the second or subsequent PACK, in the area of the Data SIZE/Before Pack Address, the data block address of a PACK adjacent to this PACK is recorded.

In Fig. 35, in byte 3 and byte 4, Next Pack Address, that is, the first data block address of the next PACK is recorded.

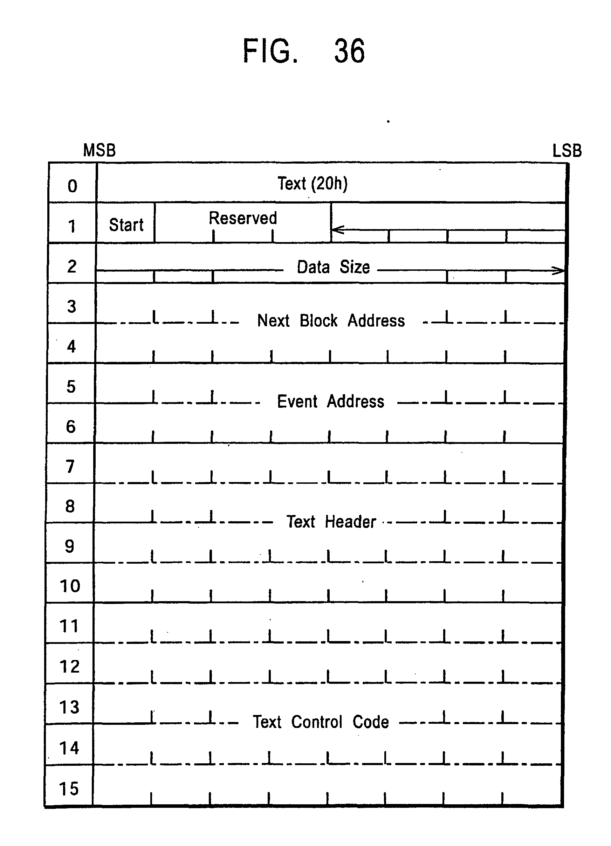

Next, the data structure of TEXT BLOCK is described with reference to Fig. 36. The text Block is a block that is needed to treat text, and consists of 4 D.B. (64 bytes). Fig. 36 shows the first data block among four data blocks.

In Fig. 36, in byte 0, 20h representing a text block is recorded. In byte 1, in the most significant bit area, Start bit, that is, Start bit is recorded. In this area, "1" that indicates that the PACK is the first PACK of data is recorded.

In Fig. 36, the second lower bit from the most significant bit to bit 4 of byte 1 are an undefined area. In a lower adjacent bit to the least significant bit and in all the bits of byte 2, Data Size, that is, the size of data, is recorded. Specifically, since the text data is formed by 1 PACK (4 D.B.), 1 PACK is recorded.

In Fig. 36, in byte 3 and byte 4, Next Block Address, that is, the first data block address of the next block, is recorded. Specifically, since text is limited to 1 PACK, 0×FFFF is recorded in this area.

In Fig. 36, in byte 5 and byte 6, Event Address, that is, the address of an event accompanied by this text, is recorded.

In Fig. 36, in bytes 7 to 10, Text Header is recorded. The data structure of recorded data is similar to that of the Text Header in the Label Information Field.

In byte 11 to byte 15 in Fig. 36, and in the second to fourth data blocks, Text Data is recorded. In other words, when at least one piece of data is recorded on the magnetic tape 31, text such as a title corresponding to each piece of tape data is designated by codes using the above-described character codes and is recorded in this area.

In the above manner, the Text Data is recorded in text blocks.

The information recorded in the text blocks is hereinafter referred to as text information.

Although the Record Information Block can be recorded in the Data-size-fixed Area, it is prevented from being recorded in the Data-size Variable Area. Also, although the text blocks can be recorded in the Data-size Variable Area, it is prevented from being recorded in the Data-size-fixed Area.

Next, data blocks recordable in either of the Data-size-fixed Area and the Data-size Variable Area are described. The data blocks recordable in either of the Data-size-fixed Area and the Data-size Variable Area include two types, NO INFORMATION BLOCKS and SKIP INFORMATION BLOCKS. The NO INFORMATION BLOCKS are blocks having no recorded information. The SKIP INFORMATION BLOCKS are blocks that each designate consecutive unused areas.

As described above, in the first byte of a data block, an ID (Block ID) indicating what the block represents as data is recorded. In the first byte of the NO INFORMATION BLOCK, 00h indicating that no information is recorded is recorded.

A SKIP INFORMATION BLOCK is a block that designates consecutive unused areas, and when a SKIP INFORMATION BLOCK is defined, the number of blocks which is designated in Skip Block Size defined in the data block represents the number of blocks of unused areas subsequent to the SKIP INFORMATION BLOCK. A data block in the range designated by the SKIP INFORMATION BLOCK is used as an unused area, even if any data is recorded in the data Block ID.

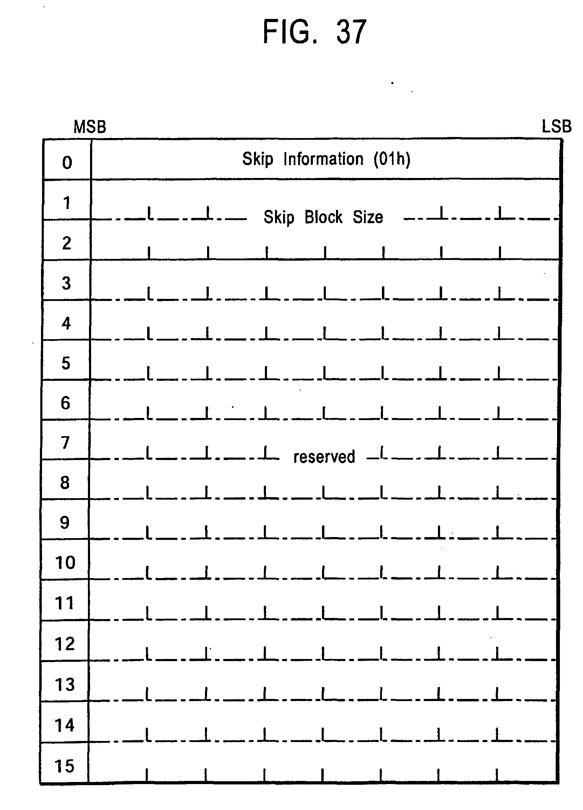

Next, the data structure of the SKIP INFORMATION BLOCK is described with reference to Fig. 37. In Fig. 37, in the first byte, a block ID, 01h, indicating SKIP INFORMATION BLOCK is recorded. In the second and third bytes, Skip Block Size, that is, the number of blocks of an unused area, is recorded.

In the memory in the IC chip 32, the above-described data structure is used to record data.

Next, a process that, based on the information recorded in the IC chip 32, plays back the data recorded on the magnetic tape 31 is described.

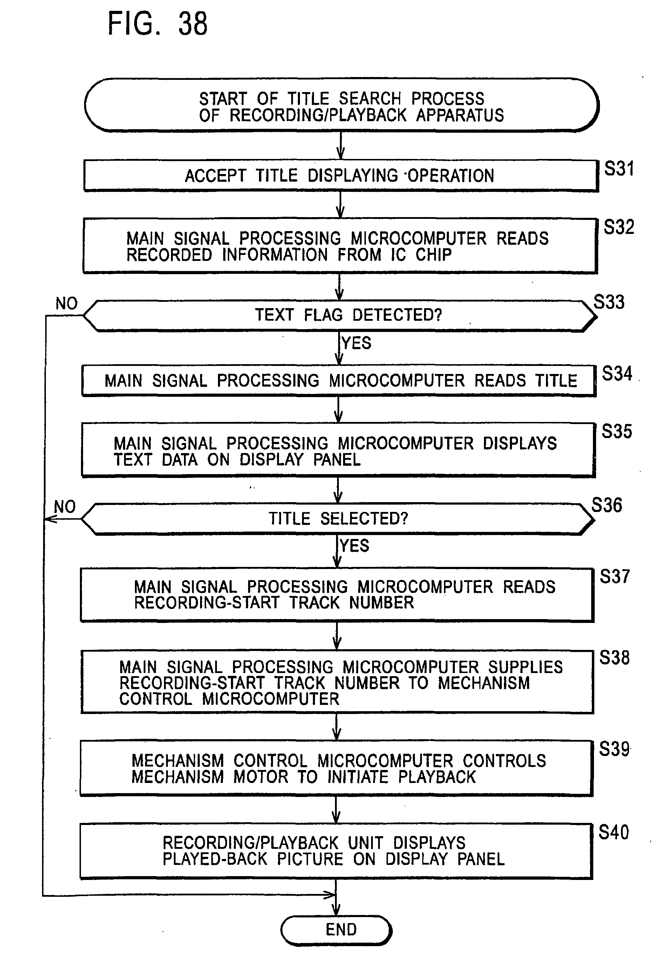

A process (title search process) in which a list of titles of data recorded in the IC chip 32 is displayed on the display panel 18, and data selected from the list of titles by the user is played back is described with reference to the flowchart in Fig. 38.

In step S31, an instruction is input from the operation input unit 20 to the recording/playback apparatus 1 so that it displays titles of the data recorded on the magnetic tape 31. The operation input unit 20 supplies the input instruction to the main signal processing microcomputer 21.

In step S32, the main signal processing microcomputer 21 reads, from the IC chip 32, recorded information corresponding to at least one piece of the data recorded on the magnetic tape 31, and stores the recorded information in the built-in memory. Specifically, the main signal processing microcomputer 21 reads, from the record information block shown in Fig. 34, the recording-start track number, recording-end track number, MIC-ID, and date and time in recording-start mode of data, a video signal recording method, an audio signal recording method, the content of an input picture in recording mode, and identification information concerning whether or not text information is represented and on whether or not still picture recording is used, and stores the read information in the built-in memory. The main signal processing microcomputer 21 reads from the record information block the recorded information corresponding to at least one piece of the data recorded on the magnetic tape 31, and stores the recorded information in the built-in memory.

In step S33, based on the recorded information stored in the built-in memory, the main signal processing microcomputer 21 determines whether or not text information is included. Specifically, based on the record (the most significant bit in byte 15 in Fig. 34) in at least one piece of recorded information corresponding to at least one piece of the data recorded on the magnetic tape 31, the main signal processing microcomputer 21 determines whether or not the text data is recorded in the text block. As a result, when the main signal processing microcomputer 21 determines that the text block includes no text data, it displays "No title is recorded" on the display panel 18, and ends the process. If the main signal processing microcomputer 21 has determined that text data is included in at least one text block, it proceeds to step S34.

In step S34, the magnetic tape 31 reads text data text data of at least one title from the text block.

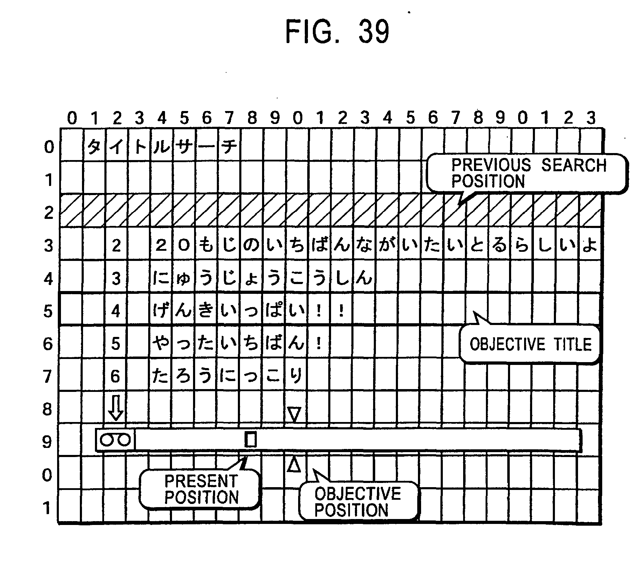

In step S35, the main signal processing microcomputer 21 displays the title text data read in step S34 on the display panel 18, as shown in Fig. 39.

Fig. 39 shows an example of a picture displayed on the display panel 18. On the left side of the screen, 0, 1, 2, 3, 4, 5, 6, 7, 8, 9, 0, 1 are shown, and these indicate rows (Y-axis) on the display panel 18 and are not displayed on the display panel 18. A line of numerals on the top side of the screen is also similar, and they indicate columns on the display panel 18 and are actually not displayed on the display panel 18. In Fig. 39, " 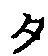 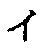 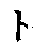 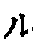 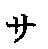 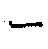 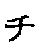 " that indicates a title display screen is displayed in row 1, and a title is displayed in row 3 to row 7. Row 2 is blacked out, and this indicates that, although a title was displayed, data corresponding to the title has already been played back.

A cursor is pointed to the title "4 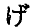 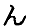 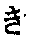 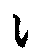 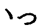 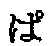 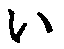 ! !" in row 5. Also, in row 9 is displayed a position (denoted by PRESENT POSITION in the Figure) in which the head 17 presently touches the magnetic tape 31, and the recording-start position on the magnetic tape 31 of data corresponding to the title to which the cursor is pointed is indicated by a triangle (OBJECTIVE POSITION in the Figure).

By way of example, by inputting, from the operation input unit 20, an instruction to play back the title "4 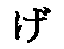 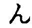 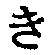 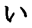 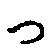 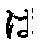 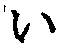 ! !" in row 5, in step S36, the main signal processing microcomputer 21 determines that a title for playback is designated, and proceeds to step S37.

When any title is not instructed to be played back on the screen on the display panel 18 shown in Fig. 39, and the displayed screen is switched by an instruction input from the operation input unit 20, in step S36, the main signal processing microcomputer 21 determines that a title to be played back is not designated, and ends the process.

In step S37, the main signal processing microcomputer 21 picks up, from the recorded information stored in the built-in memory, recorded information corresponding to the selected title, and reads a recording-start track number from the picked-up recorded information.

In step S38, the main signal processing microcomputer 21 supplies the mechanism control microcomputer 22 with the recording-start track number read in step S37, and instructs it to play back data from the recording-start track number.

In step S39, the mechanism control microcomputer 22 acquires, from the recording/playback unit 15, the track number of the position in which the head 17 presently touches the tape, calculates a relative position on the magnetic tape 31 to the recording-start track number supplied from the main signal processing microcomputer 21, and calculates how much fast-forwarding (or rewinding) from the present tape position can reach the recording-start track number. After that, the mechanism control microcomputer 22 controls the mechanism motor 23 to fast forward (or rewind) the magnetic tape 31, and starts playback in a tape position corresponding to the recording-start track number.

The data recorded on the magnetic tape 31 is read by the head 17, is converted into an electric signal, and is supplied from the read/write amplifier 16 to the recording/playback unit 15. In step S40, the recording/playback unit 15 decompresses, based on the supplied data, compressed picture data and displays the picture data on the display panel 18, and supplies audio data to the audio output unit 19 for audio output when the audio signal is included.

As described above, the title search process is executed.

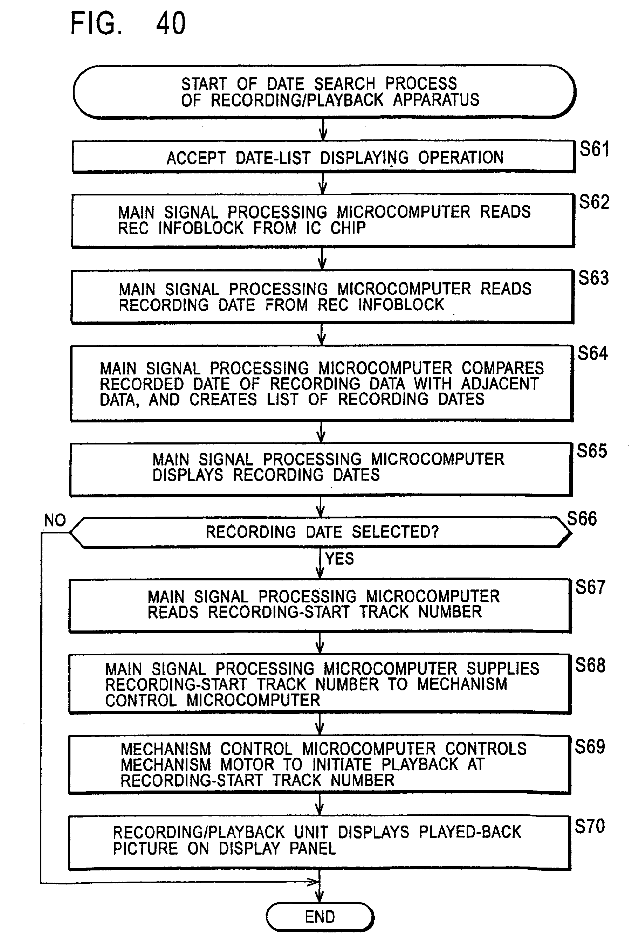

Based on the information recorded in the IC chip 32, the recording/playback apparatus 1 creates, based on each date of at least one piece of the data recorded on the magnetic tape 31, a list for each piece of date and displays the list, and accepts, from the user, selection of the date of data to be played back. Next, a playback process (date search process) based on a date is described with reference to the flowchart in Fig. 40.

In step 61, an instruction is input from the operation input unit 20 to the recording/playback apparatus 1 to display each date of the data recorded on the magnetic tape 31. The operation input unit 20 supplies the input instruction to the main signal processing microcomputer 21.

In step S62, the main signal processing microcomputer 21 reads, from the IC chip 32, the recorded information corresponding to at least one piece of the data recorded on the magnetic tape 31, and stores the information in the built-in memory. The process in step S62 is identical to that in step S32 shown in Fig. 38.

In step S63, the main signal processing microcomputer 21 extracts each year, month, and day of recording from the recorded information stored in the built-in memory. Specifically, the main signal processing microcomputer 21 reads the year, month, and day of recording of data from the record (the most significant bit in byte 15 in Fig. 34) included in at least one piece of the recorded information corresponding to at least one piece of the data recorded on the magnetic tape 31.

In step S64, the main signal processing microcomputer 21 creates a date list based on each year, month, and day of recording corresponding to at least one piece of the data recorded on the magnetic tape 31. Among at least one piece of the data recorded on the magnetic tape 31, pieces having identical years, months, and days of recording are collectively treated as an item having the same year, month, and day.

In step S65, the main signal processing microcomputer 21 displays, on the display panel 18, the date list created in step S64, and is on standby until a designation of the date of data to be played back is input by the user.

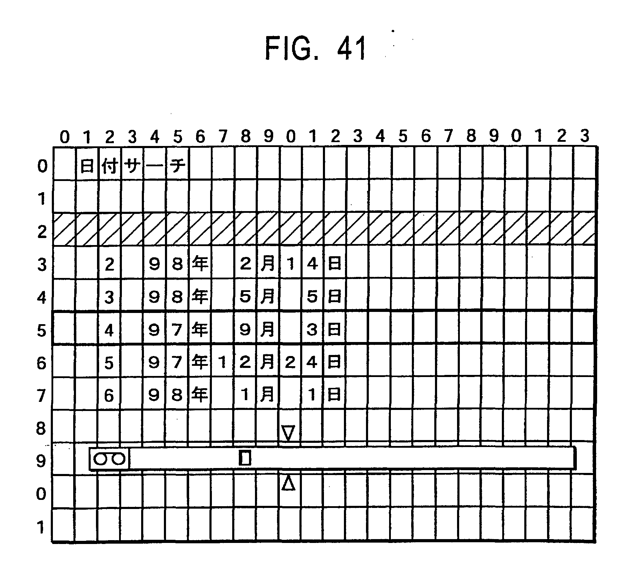

Fig. 41 shows an example of the screen displayed on the display panel 18 in step S65. In Fig. 41, similarly to Fig. 39, numerals that indicate rows and columns on the screen are assigned outside the frame of the screen. In row 1 is shown " 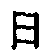 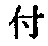 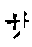 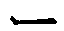 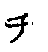 " indicating that the screen being displayed is a date search screen, and dates are displayed in rows 3 to 7. Row 2 that is blacked out indicates that, although a title was displayed in row 2, data corresponding to the title has already been played back.

The cursor is pointed to the title "4 9 7 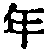 9 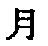 3 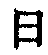 " in row 5. The representation in row 9 is similar to that displayed in row 9 in Fig. 39.

For example, by inputting, from the operation input unit 20, an instruction to play back the date "4 9 7 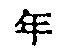 9 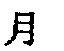 3 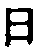 " in row 5, in step S66, the main signal processing microcomputer 21 determines that a date for playback is designated, and proceeds to step S67.

When any date is not designated for playback on the display panel 18 shown in Fig. 41, and the displayed screen is switched by an instruction input from the operation input unit 20, in step S66, the main signal processing microcomputer 21 determines that the title for playback is not designated, and ends the process.

In step S67, the main signal processing microcomputer 21 picks up, from the recorded information stored in the built-in memory, recorded information corresponding to the selected date, and reads a recording-start track number from the picked-up recorded information.

Since the processes in step S68 to step S70 are identical to those in step 38 to step S40 in Fig. 39, a description thereof is omitted.

As described above, data can be retrieved based on a year, month, and day of recording which is recorded on the magnetic tape 31.

On the magnetic tape 31, moving pictures can be recorded, and still pictures can be also recorded. The recording/playback apparatus 1 of the present invention displays a list of still pictures recorded on the tape cassette 2, and enables the user to select therefrom a still picture to be displayed.

Next, a process (photo search process) in which a list of still pictures recorded on the tape cassette 2 is displayed and the user is allowed to select a still picture to be displayed is described with reference to the flowchart in Fig. 42.

In step S81, an instruction is input from the operation input unit 20 to the recording/playback apparatus 1 to display the list of the still pictures recorded on the magnetic tape 31. The operation input unit 20 supplies the input instruction to the main signal processing microcomputer 21.

In step S82, the main signal processing microcomputer 21 reads, from the IC chip 32, recorded information corresponding to at least one piece of the data recorded on the magnetic tape 31, and stores the information in the built-in memory. The process in step S82 is identical to that in step S32 shown in Fig. 38 and that in step S62 shown in Fig. 41.

In step S83, based on the recorded information stored in the built-in memory, the main signal processing microcomputer 21 determines whether or not a still picture is included. Specifically, based on the record (the most significant bit in byte 15 to the lower second bit in Fig. 34) included in at least one piece of the data corresponding to at least one piece of the data recorded on the magnetic tape 31, the main signal processing microcomputer 21 determines whether or not the magnetic tape 31 has a still picture recorded thereon. As a result, when the it is determined that no still picture is included on the magnetic tape 31, "NO PHOTO IS RECORDED" is displayed on the display panel 18 and the process is ended. When it is determined that at least one or more still pictures are included, the process proceeds to step S84.

In step S84, based on the recorded information stored in the built-in memory, the main signal processing microcomputer 21 reads days and times of recording on which the still pictures were recorded, and creates a list.

In step S85, the main signal processing microcomputer 21 displays, on the display panel 18, the list of days and times of recording of still pictures, and is on standby until a designation of a still picture to be displayed is input from the user.

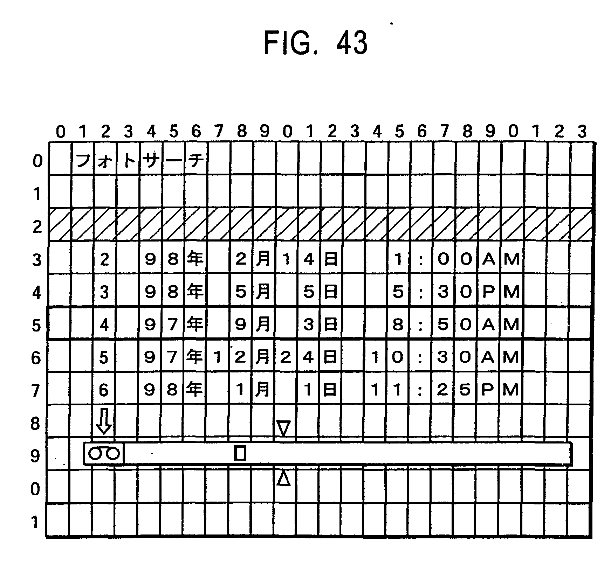

Fig. 43 shows an example of the screen displayed on the display panel 18. In Fig. 43, numerals that indicate rows and columns on the screen are assigned outside the frame of the screen. In row 1, " 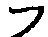 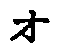 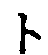 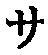 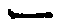 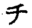 " indicating that the screen being displayed is a photo search screen is displayed, and dates and times of recording of still pictures are displayed in row 3 to row 7. Row 2 that is blacked out indicates that, although a title was displayed in row 2, data corresponding to the title has already been displayed.

Also, the cursor is pointed to the date "4 9 7 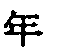 9 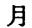 3 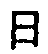 8 : 50AM" in row 5. The representation in row 9 is similar to that displayed in row 9 in Fig. 39.

For example, by inputting, from the operation input unit 20, an instruction to display the still picture corresponding to the recording date and time, "4 9 7 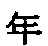 9 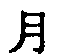 3 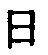 8 : 50AM" in row 5, in step S86, the main signal processing microcomputer 21 determines that a still picture to be displayed is designated, and proceeds to step S87.

When the still picture corresponding to any recording date and time is not designated on the screen on the display panel 18 shown in Fig. 43, and the displayed screen is switched by an instruction input from the operation input unit 20, in step S86, the main signal processing microcomputer 21 determines that a title for playback is not designated, and ends the process.

In step S87, the main signal processing microcomputer 21 picks up, from the information recorded in the built-in memory, recorded information corresponding to the still picture having the selected recording date and time, and reads a recording-start track number from the picked-up recorded information.

Since the processes in step 88 to step 90 are identical to those in step S38 to step S40 in Fig. 39, a description thereof is omitted.

As described above, data recorded on the magnetic tape 31 is searched for a still picture.

The recording/playback apparatus 1 of the present invention facilitates the management of data recorded on the magnetic tape 31 by, in recording data onto the magnetic tape 31, recording, in the built-in IC chip 32 of the tape cassette 2, a recording-start track number, a recording-end track number, a recording date and time, MIC-ID, each title of the recorded data, a data type, etc.

### Industrial Applicability

As described above, according to a recording/playback apparatus and method of the present invention, by acquiring information concerning at least one piece of data recorded on a first recording medium from a second recording medium, extracting each recording-start position of the at least one piece of data recorded on the first recording medium from the acquired information, extracting each recording-end position of the data whose recording-start position from the acquired information, accepting selection of data to be played back from the at least one piece of data, and playing back the data from the recording-start position corresponding to the data whose selection is accepted, and by setting information to include each recording-start position, recording-end position, and recording date and time of data, and recording on the second recording medium the information in a form collectively treated for each of the at least one piece of data recorded on the first recording medium, efficient management of data can be performed.

## Claims

1. A recording/playback apparatus for recording or playing back data on recording media constituted by a first recording medium on which the data is recorded and a second recording medium on which information concerning the data is recorded, comprising:
first acquisition means for acquiring, from said second recording medium, the information concerning at least one piece of the data recorded on said first recording medium;
first extraction means for extracting, from the information acquired by said first acquisition means, each recording-start position of said at least one piece of the data recorded on said first recording medium;
second extraction means for extracting, from the information acquired by said first extraction means, each recording-end position of the data whose recording-start position is extracted by said first extraction means;
accepting means for accepting selection of data to be played back from said at least one piece of the data; and
playback means for playing back the data from the recording-start position corresponding to the selection of data accepted by said accepting means,
wherein the information includes the recording-start position and recording-end position of the data, and a recording date and time thereof, and is recorded on said second recording medium in a form which is collectively treated for each of said at least one piece of the data recorded on said first recording medium.

2. A recording/playback apparatus according to claim 1, wherein identification information for identifying each of said at least one piece of the data is further recorded on said first recording medium and said second recording medium.

3. A recording/playback apparatus according to claim 1, further comprising:
first recording means for recording the data on said first recording medium; and
second recording means for recording, on said second recording means, the recording-start position and recording-end position of the data recorded on the first recording medium by said first recording means.

4. A recording/playback apparatus according to claim 3, wherein said second recording means further records, on said second recording medium, the year, day, and time of recording, recording-start time, and recording-end time of the data recorded by said first recording means.

5. A recording/playback apparatus according to claim 4, further comprising second acquisition means for acquiring a title of the data recorded by said first recording means,
wherein said second recording means further records, on said second recording medium, the title of the data acquired by said second acquisition means.

6. A recording/playback apparatus according to claim 3, further comprising capture means for capturing a moving picture or a still picture,
wherein said first recording means records, on said first recording medium, the moving picture or the still picture which is captured by said capture means.

7. A recording/playback apparatus according to claim 1, wherein said first recording medium is a magnetic tape.

8. A recording/playback apparatus according to claim 1, further comprising:
determination means for determining whether or not at least one title of said at least one piece of the data recorded in the information is recorded; and
third extraction means for extracting said at least one title from the information when said determination means determines that said at least one title is recorded; and
display means for displaying a list of said at least one title extracted by said third extraction means,
wherein said accepting means accepts the selection of data to be played back from the list displayed by said display means.

9. A recording/playback apparatus according to claim 1, further comprising:
determination means for determining, based on the information, whether or not said at least one piece of the data includes data of at least one still picture;
third extraction means for extracting each recording date and time of said at least one still picture from the information when said determination means determines that said at least one still picture is included; and
display means for displaying the recording date and time corresponding to said at least one still picture extracted by said third extraction means,
wherein said accepting means accepts selection of a picture to be played back of said at least one still picture from the recording date and time displayed by said display means.

10. A recording/playback apparatus according to claim 1, further comprising:
third extraction means for extracting, from the information, at least one recording date and time corresponding to said at least one piece of the data;
fourth extraction means for extracting different recording dates from said at least one recording date and time; and
display means for displaying the recording dates extracted by said fourth extraction means,
wherein said accepting means accepts the selection of data to be played back from the recording dates displayed by said display means.

11. A recording/playback method for a recording/playback apparatus for recording or playing back data on recording media constituted by a first recording medium on which the data is recorded and a second recording medium on which information concerning the data is recorded, said recording/playback method including:
a first acquisition step for acquiring, from said second recording medium, the information concerning at least one piece of the data recorded on said first recording medium;
a first extraction step for extracting, from the information acquired in said first acquisition step, each recording-start position of said at least one piece of the data recorded on said first recording medium;
a second extraction step for extracting, from the information acquired in said first extraction step, each recording-end position of the data whose recording-start position is extracted in said first extraction step;
an accepting step for accepting selection of data to be played back from said at least one piece of the data; and
a playback step for playing back the data from the recording-start position corresponding to the selection of data accepted in said accepting step,
wherein:
the information includes the recording-start position and recording-end position of the data, and a recording date and time thereof, and is recorded on said second recording medium in a form which is collectively treated for each of said at least one piece of the data recorded on said first recording medium.
